# EUROPÄISCHE PATENTSCHRIFT

(11) **EP 0 832 165 B1**
(45) Veröffentlichungstag und Bekanntmachung des Hinweises auf die Patenterteilung: **14.07.1999**
(21) Anmeldenummer: 97921695.9
(22) Anmeldetag: 22.04.1997
(51) Int. Cl.: C09J 193/04, C08L 93/04, C09J 191/06

(54) **HARZHALTIGE DISPERSIONSKLEBSTOFFE**
RESIN-BASED DISPERSION GLUES
COLLES EN DISPERSION A BASE DE RESINES

(30) Priorität: 23.04.1996 DE 19616106
(43) Veröffentlichungstag der Anmeldung: 01.04.1998
(73) Patentinhaber: Uzin Utz Aktiengesellschaft, 89079 Ulm (DE)
(72) Erfinder: KRIEGER, Roland, D-89079 Ulm (DE)
(74) Vertreter: Reinhard - Skuhra - Weise & Partner
(86) Internationale Anmeldenummer: EP9702033
(87) Internationale Veröffentlichungsnummer: WO9740117

(56) Entgegenhaltungen:
- EP-A- 0 149 679
- EP-A- 0 221 461
- EP-A- 0 255 637
- EP-A- 0 347 657
- EP-A- 0 620 243
- US-A- 4 654 388

## Beschreibung

Die vorliegende Erfindung betrifft Dispersionsklebstoffe, enthaltend an sich bekannte wäßrige Polymerdispersionen, und gegebenenfalls zusätzlich an sich bekannte Additive, denen bei der Herstellung zur gezielten Einstellung der Klebrigkeit erfindungsgemäße Harzzubereitungen zugesetzt werden.

Klebstoffe können hergestellt werden, indem geeignete Kunstharze, Naturharze oder Polymere in flüchtigen, organischen Lösungsmitteln gelöst werden. Die Klebewirkung kommt nach dem Auftrag der Klebstoffe und dem Zusammenfügen der zu verbindenden Substrate durch physikalische Verdunstung der Lösungsmittel und dem Verbleiben der festen Klebstoffbestandteile zustande.

Die Verdunstung der Lösungsmittel ist Ursache für kurz- bis langfristige Emissionen flüchtiger organischer Stoffe (englisch: Volatile Organic Compounds / VOC) in die Raumluft bzw. in die Umwelt. Derartige VOC-Emissionen sind aus einer Vielzahl gesundheitlicher und ökologischer Gründe unerwünscht. Um sie zu vermeiden werden zunehmend Klebstoffe auf Basis von wasserbasierenden Polymer-, Kunststoff- oder Kunstharzdispersionen verwendet. Ihre Verfestigung erfolgt im Laufe der Verflüchtigung des enthaltenen Wassers. Derartige Klebstoffe werden als Dispersionsklebstoffe bezeichnet.

Bei Dispersionsklebstoffen ist vielfach keine Anfangsklebrigkeit erforderlich, z.B. bei vielen industriellen oder handwerklichen Anwendungen, bei denen die Fügeteile bis zur Verfestigung des Klebstoffs eingespannt, gepreßt oder fixiert werden können, ggf. auch die Abbindung des Klebstoffs durch zusätzliche Wärmeeinwirkung beschleunigt werden kann. Typische Beispiele dafür sind Verpackungs, Papier- oder Holzleime.

Andere Dispersionsklebstoffe werden in Bereichen verwendet, in denen eine Fixierung der Fügeteile oder eine thermische Abbindebeschleunigung nicht möglich ist. In diesem Fall müssen die Klebstoffe sofort oder kurz nach dem Fügen eine soweit ausreichende Anfangsklebrigkeit aufweisen, daß die Fügeteile bis zum Abbinden des Klebstoff fixiert werden. Ein typischer Bereich mit dieser Anforderung ist z.B. das Kleben von Boden-, Wand- und Deckenbelägen in Innenräumen.

Um Dispersionsklebstoffen die erforderliche Anfangsklebrigkeit zu verleihen, werden bei ihrer Herstellung üblicherweise klebrigmachende Harze mit eingearbeitet. Bevorzugt werden dazu Naturharze, z.B. Kolophonium, und Naturharzester sowie deren Gemische verwendet. Die Auswahl der in vielfältiger Form verfügbaren Harze richtet sich nach den Anforderungen, die an den Klebstoff gestellt werden und ist dem Fachmann geläufig.

Die in fester bis zähflüssiger Form vorliegenden Harze müssen beim Herstellungsprozeß des Klebstoffs in eine soweit flüssige Form gebracht werden, daß sie sich in die ebenfalls flüssig vorliegende Dispersionzubereitung einmischen lassen. Um diese flüssige Form der Harze zu erreichen, wird üblicherweise in einem separaten Arbeitsgang eine flüssige Harzzubereitung hergestellt, die dann in die Mischung der anderen Klebstoffbestandteile eingearbeitet wird.

Flüssige Harzzubereitungen dieser Art werden nach bekanntem Stand der Technik hergestellt, indem man die Harze in leicht flüchtigen, organischen Lösungsmitteln auflöst. Die so erhaltenen Harzlösungen werden bei Raumtemperatur in die Mischung der anderen Klebstoffbestandteile eingearbeitet. Dieses Verfahren hat aber zur Folge, daß in den Klebstoff leicht flüchtige, organische Lösungsmittel eingeschleppt werden. Je nach Lösungsmittelanteil spricht man dann von sog. lösungsmittelarmen oder lösungsmittelhaltigen Dispersionsklebstoffen.

Die verwendeten, leicht flüchtigen Lösungsmittel weisen in der Regel einen Siedepunkt unter 200 °C und bei Normalbedingungen einen Dampfdruck von über 100 Pa auf. Sie verdunsten z.T. bereits während und kurz nach dem Klebstoffauftrag, z.T. anschließend im Laufe von Wochen und Monaten. Ihre Verdunstung ist die Ursache für hohe VOC-Emissionen und Raumluftbelastungen, die hinsichtlich Arbeits-, Umwelt- und Verbraucherschutz ein erhebliches Problem darstellen und deshalb unerwünscht sind.

**EP 0 221 461** beschreibt ein solches Verfahren, bei dem die klebrigmachenden Harze in Form 70 %-iger Lösungen in Toluol verwendet werden. Der damit in den Klebstoff eingeführte Toluolanteil kann über längere Zeiträume zu erheblichen Toluolemissionen führen. Entsprechendes gilt auch für andere leicht flüchtige Lösungsmittel.

Nach anderen bekannten, aber weiterentwickelten Verfahren werden zur Vermeidung leicht flüchtiger Lösungsmittelanteile die Harze in flüssigen, organischen Stoffen gelöst, deren Siedepunkt zwischen 200 und 250°C liegt und die deshalb als sog. Hochsieder bezeichnet werden.

**US-A 46 54 388** beschreibt ein Verfahren, bei dem eine Harzzubereitung aus Kolophonium und Kolophoniumestern in Verbindung mit Diethylenglycolmonobutylether verwendet wird. Diethylenglycolmonobutylether hat bei Normalbedingungen einen Dampfdruck von ca. 2.7 Pa und führt dementsprechend zu länger anhaltenden Emissionen aus damit hergestellten Klebstoffen.

In **DE 40 39 781** wird für die Herstellung der Harzzubereitung die Mitverwendung von Stoffen der allgemeinen Formel R¹-O-(X-O)ₙ-R² beschrieben, in der X ein Alkylen mit 2 bis 4 C-Atomen, n eine ganze Zahl von 1 bis 8, R¹ und R² Wasserstoff oder ein Aryl- oder Alkylarylrest mit 6 bis 12 C-Atomen sind, wobei R¹ und R² nicht gleichzeitig Wasserstoff sind. Es wird aber gezeigt, daß n vorzugsweise 1 sein sollte, wobei das gezeigte Beispiel des Monophenylglycolethers eine Substanz mit einem Dampfdruck von 4 Pa bei Normalbedingungen darstellt, die ebenfalls zu länger anhaltenden Emissionen führt. Wird n höher gewählt, gezeigt am Beispiel n = 25 für ein Additionsprodukt aus Kresol und Propylenoxid, dann nehmen die klebetechnischen Eigenschaften der daraus hergestellten Klebstoffe, wie gezeigt wird, stark ab.

Die in diesen Schriften zur Herstellung von Harzzubereitungen vorgeschlagenen Stoffe sowie auch alle anderen für diesen Zweck bekanntermaßen verwendbaren Hochsieder, wie Butyldiglycolacetat, zeigen bei Normalbedingungen immer noch einen meßbaren Dampfdruck von über 0.5 Pa. Aufgrund ihrer geringeren Flüchtigkeit führen sie so zwar nicht zu arbeitsschutzrelevanten Sofortemissionen, sie können jedoch über längere Zeiträume verdunsten und damit die Raumluft belasten. Auch wenn diese Hochsieder selbst nicht als gesundheitsschädlich oder giftig eingestuft sind und nur in als unbedenklich zu erachtenden Konzentrationen emittieren, sind die resultierenden Raumluftbelastungen in einem zunehmend kritischer werdenden Umfeld ausgesprochen unerwünscht.

Neben der ungelösten Emissionsproblematik weisen die in Harzzubereitungen verwendeten Hochsieder einen weiteren unerwünschten Nebeneffekt auf. Sie verbleiben aufgrund ihrer geringeren Flüchtigkeit über längere Zeiträume in den damit hergestellten Klebstoffen, neigen aber aufgrund ihrer relativ geringen Molekülgröße zur Migration in die geklebten Substrate. So werden sie z.B. mit der Erweichung von elastischen Bodenbelägen, mit chemischen Wechselwirkungen mit Bestandteilen von Bodenbelägen und mit Geruchsentwicklungen in Zusammenhang gebracht.

Nach anderen bekannten Verfahren, z.B. nach **EP 0 620 243,** werden die Harze unter Verwendung von Dispergierhilfsmitteln selbst in Wasser dispergiert und als wässerige Harzdispersion der Polymerdispersion zugegeben.

Das Wasser als flüchtiges Trägermedium ist hier zwar in keiner Weise störend, die Anwesenheit der hydrophilen bzw. stabilisierenden Dispergiermittel wirkt sich jedoch negativ auf die ausreichend schnelle Entwicklung der Klebkraft und die anwendungstechnischen Eigenschaften der resultierenden Klebstoffe aus.

In **EP 255 637** wird ein Haftöl beschrieben, das als Schmieröl mindestens ein pflanzliches und/oder mindestens ein tierisches Öl und als Haftvermittler ein kolophoniumhaltiges Harz und/oder Kolophonium enthält. Das Verhältnis von Schmieröl zu Haftvermittler wird mit einem weiten Bereich 40 - 90 : 60 - 10 beschrieben. Im Vordergrund steht dabei die Funktion des Öls als Schmiermittel, während das Harz nur eine Hilfsfunktion, die Erhöhung der Haftung des Schmieröls, ausübt. Aufgabenstellung dieser Schrift ist das Schmieren, also eine dem Kleben gerade entgegengesetzte Problemstellung. Dementsprechend überwiegt das Schmiermittel in den bevorzugten Mischungsverhältnissen auch den Haftvermittler. In keiner Weise legt diese Schrift eine Verwendung der beanspruchten Zubereitung als Klebstoff oder in Klebstoffen, insbesondere in wässerigen Dispersionsklebstoffen, nahe. Die vorliegende Erfindung hat die entgegengesetzte Aufgabenstellung, weil hier die klebrigmachende Wirkung der Harze im Vordergrund steht, das Öl dagegen nur eine Hilfsfunktion, nämlich die der verflüssigenden Wirkung, ausübt. Ebenfalls nimmt diese Schrift nicht die Vermeidung flüchtiger Bestandteile in Anspruch.

**EP 213 386** beschreibt Klebstoffdispersionen für Fliesenbeläge unter Mitverwendung von synthetischen Klebstoffharzen. Über die Verwendung von Ölen pflanzlicher Herkunft allein oder in Verbindung mit Kolophoniumharzen wird nichts ausgesagt.

**FR 2 543 564** beschreibt reaktive Dispersionsklebstoffe auf Epoxidharzbasis. In den Ansprüchen dieser Schrift wird epoxidiertes Sojaöl als flüssiger Träger für den festen Aminkatalysator genannt. Epoxidiertes Sojaöl ist ein synthetisch hergestelltes, epoxidgruppenhaltiges, reaktives Pflanzenöl, das mit den erfindungsgemäßen Ölen der vorliegenden Anmeldung nichts gemeinsam hat. Über die Verwendung von chemisch unveränderten, natürlichen Ölen oder veresterten, natürlichen Fettsäuregemischen allein oder in Verbindung mit Kolophoniumharzen wird nichts ausgesagt.

**FR 2 155 658** beschreibt die Mitverwendung klebkraftverstärkender Harze in lösungsmittelfreien Polychloropren-Dispersionen. Als Harze werden u.a. Kolophonium und Kolophoniumester genannt. Diese Harze werden zur Herstellung einer Harzzubereitung entweder in monomerem Chloropren gelöst oder in Wasser dispergiert. Über die bereits oben als bekannt beschriebenen Harzzubereitungen in Form von Lösungen in flüchtigen, organischen Lösungsmitteln oder in Form von wässerigen Harzemulsionen hinaus macht diese Schrift keine Aussagen, die die vorliegende Erfindung in irgendeiner Weise nahelegen, insbesondere wird nicht über die Verwendung von Ölen pflanzlicher Herkunft ausgesagt.

**FR 1 504 067** beschreibt Kopierpapier, bei dem in der Farbschicht u.a. als fettende Komponente Rizinusöl mitverwendet wird. Abgesehen davon, daß auch hier der fettende, dehäsive Charakter des Öls im Vordergrund steht, wird weder etwas über die Verwendung von Kolophoniumharzen bzw. über die vorteilhafte Kombination solcher Harze mit Ölen pflanzlicher Herkunft gesagt noch über deren Verwendung in wässerigen Dispersionsklebstoffen.

**US 5 288 780** beschreibt in Wasser dispergierte chlorierte Polyolefine als Primer für Polyethylen-/ Polypropylen-Kunststoffe. In der Schrift werden ausschließlich Emulsionen synthetischer Harze und Kunststoffe in synthetischen Weichmachern erwähnt. Über die Verwendung von Kolophoniumharzen und / oder Ölen pflanzlicher Herkunft findet sich kein Hinweis.

Auf Harzzubereitungen, bestehend aus Kolophonium und/oder Kolophonium-Derivaten und Ölen pflanzlicher Herkunft, bei denen die Harze als funktionsbestimmende Bestandteile dienen, insbesondere aber über deren vorteilhafte Verwendung in Dispersionsklebstoffen, findet sich demnach in den bekannten Schriften kein Hinweis.

Eine Aufgabe der vorliegenden Erfindung ist es daher, Dispersionsklebstoffe der eingangs genannten Gattung zu schaffen, die die genannten Nachteile nicht aufweisen und vorteilhaft als emissionsarme Dispersionsklebstoffe insbesondere für Boden-, Wand- und Deckenbeläge im Baubereich geeignet sind.

Diese Aufgabe wird erfindungsgemäß durch Dispersionsklebstoffe gelöst, die eine Harzzubereitung enthalten, die besteht aus einer Mischung aus:
a. **20 bis 90** Gew.-% Harzen mit einem Schmelzpunkt bzw. Erweichungsbereich von 20 bis 130°C in Form von natürlichen und/oder modifizierten Kolophoniumharzen und/oder Kolophoniumharzestern und/oder aus Kolophonium gewonnenen Harzsäuregemischen und/oder deren Estern und
b. **80 bis 10** Gew.-% bei Raumtemperatur flüssigen Ölen als Trägermedium für die unter a. aufgeführten Harze, bestehend aus natürlichen Gemischen der Glycerinester von gesättigten und/oder ungesättigten und/oder hydroxylgruppenhaltigen C14 - C 22-Fettsäuren pflanzlicher Herkunft, ggf. raffiniert oder gereinigt, und/oder Estern von Gemischen gesättigter und/oder ungesättigter C14 - C 22-Fettsäuren pflanzlicher Herkunft mit einwertigen C1 bis C12-Alkoholen, ggf. raffiniert oder gereinigt.

Vorzugsweise bestehen die erfindungsgemäßen Dispersionsklebstoffe aus:
a. 5 - 60 Gew.-% der vorstehend offenbarten Harzzubereitung und
b. 40 - 95 Gew.-% wäßrigen Polymerdispersionen bzw. -emulsionen an sich bekannter Art, ggf. enthaltend zusätzliche Dispergiermittel, Entschäumungsmittel, Konservierungsmittel, Verdickungsmittel, Stellmittel, Additive und Füllstoffe ebenfalls an sich bekannter Art.

Vorzugsweise ist die Harzzubereitung eine homogene Mischung.

Erfindungsgemäß wurden Harzzubereitungen gefunden, die innerhalb erfindungsgemäßer Mengenbereiche den gestellten Anforderungen in hohem Maße gerecht werden. Sie sind homogen flüssig und können innerhalb eines Temperaturbereiches von 25 bis 95 °C in eine für die Handhabung erforderliche Viskosität gebracht werden. Die erfindungsgemäßen Harzzubereitungen lassen sich sehr gut in Dispersionszubereitungen einarbeiten und führen überraschend zu sehr variabel einstellbaren Anfangsklebrigkeiten der damit hergestellten Dispersionsklebstoffe. Eine negative Wirkung auf die damit verklebten Beläge ist nicht erkennbar.

Die erfindungsgemäß verwendeten, flüssigen Trägermedien weisen keinen meßbaren Dampfdruck auf, so daß sich die VOC-Emissionen der Harzzubereitung im wesentlichen auf die Eigenemissionen der verwendeten Harze beschränken. Die damit hergestellten Dispersionsklebstoffe zeigen im Vergleich zu nach bekannten Verfahren hergestellten Klebstoffen deutlich geringere VOC-Emissionen, sowohl in der Anfangsphase als auch in der Langzeitphase. Sie entsprechen damit in hohem Maße den Anforderungen eines integrierten Arbeits-, Umwelt- und Verbraucherschutzes. Aufgrund ihres gesteigerten Anteils an nachwachsenden, biologisch abbaubaren Bestandteilen sind sie auch in erhöhtem Maß umweltverträglich.

Mit den erfindungsgemäßen Harzzubereitungen lassen sich Dispersionsklebstoffe herstellen, die im übrigen in an sich bekannter Weise aus Kunststoff-, Kunstkautschuk-, Naturkautschuk- oder Kunstharzdispersionen, d.h. Polymerdispersionen, Dispergier-, Entschäumungs-, Verdickungs-, Konservierungs- und Stellmitteln, anderen Additiven und mineralischen Füllstoffen aufgebaut sein können. Die nach dem erfindungsgemäßen Verfahrens hergestellten Dispersionsklebstoffe können in ihrer Anfangsklebrigkeit sehr gut eingestellt werden und weisen eine sehr gute Gesamtfunktionsfähigkeit auf. Sie eignen sich als Klebstoffe für Flächengebilde, speziell als Klebstoffe für Boden-, Wand- und Deckenbeläge in Innenräumen.

Das gefundene Verfahren besteht darin, daß zur Herstellung der Harzzubereitungen klebrigmachende Harze an sich bekannter Art, ggf. unter Zufuhr von Wärme, in an sich bekannten Ölen pflanzlicher Herkunft gelöst werden und zwar je nach Harz- und Ölart in bestimmten, besonders wirksamen Mengenverhältnissen.

Die erfindungsgemäß verwendbaren Öle dienen anstelle der nach bekanntem Stand bisher verwendeten, leicht- bis schwerflüchtigen, organischen Lösungsmittel als flüssiges Trägermedium für die Harze. Sie weisen keinen definierten Siedepunkt oder aber einen Siedepunkt über 250 C auf und gelten deshalb nach EU-Definition (Amtsblatt der Europäischen Gemeinschaften DE vom 6.1.96, Nr. L 4/13, Anlage 1, Pkt 3) selbst nicht als flüchtige, organische Verbindungen (VOC). Sie enthalten in marktüblicher, technisch gereinigter oder raffinierter Form auch keine anderen nennenswerten VOC-Mengen, die zu praktisch relevanten Emissionen führen könnten.

Als besonders geeignet haben sich für diesen Zweck Öle pflanzlicher Herkunft erwiesen, die in natürlicher Form als Glycerinester von Gemischen gesättigter, ungesättigter, z.T. auch hydroxylgruppenhaltiger C14 bis C22-Fettsäuren vorliegen. Öle dieser Art sind z.B. Leinöl, Rapsöl, Rizinusöl, Rüböl, Sojaöl, Sonnenblumenöl u.ä.

Als ebenfalls geeignet haben sich auch Öle erwiesen, die durch Veresterung von Gemischen ungesättigter und gesättigter C14 bis C22-Fettsäuren pflanzlicher Herkunft mit einwertigen Alkoholen erhalten werden, z.B. mit einwertigen C1 bis C12-Alkoholen. Öle dieser Art sind z.B. Methyl-, Butyl- oder 2-Ethylhexylester von Tallölfettsäuren.

Als geeignet haben sich auch Gemische dieser Öle erwiesen.

Bei Verwendung von ungesättigten Ölen, z.B. Leinöl, können der Harzzubereitung zusätzlich Trocknungsbeschleuniger, sog. Sikkative, zugesetzt werden, die zu einer nachträglichen, oxidativen Härtung und damit zu einer Erhöhung der Kohäsion des Klebstoffs beitragen.

Bei Verwendung von hydroxylgruppenhaltigen Ölen, z.B. Ricinusöl, können dem fertigen Klebstoff vor der Verarbeitung mit Hydroxylgruppen reagierende Vernetzer, z.B. spezielle Polyisocyanate, zugesetzt werden, die zu einer nachträglichen Vernetzung und damit ebenfalls zu einer Erhöhung der Kohäsion des Klebstoffs beitragen.

Die beschriebenen, erfindungsgemäß verwendbaren Ester von Fettsäuregemischen pflanzlicher Herkunft werden im folgenden zur Vereinfachung kurz als Öle bezeichnet.

Vorzugsweise werden für die Harzzubereitung unter b. natürliche Gemische pflanzlicher Herkunft von Glycerinestern gesättigter, ungesättigter, z.B. auch hydroxylgruppenhaltiger C14 bis C22-Fettsäuren als flüssiger Träger verwendet.

Besonders bevorzugt werden für die Harzzubereitung unter b. Pflanzenöle wie Leinöl, Rapsöl, Rizinusöl, Rüböl, Sojaöl oder Sonnenblumenöl, ggf. gereinigt oder raffiniert, sowie Gemische daraus als flüssiger Träger verwendet.

Ganz besonders bevorzugt werden für die Harzzubereitung unter b. Pflanzenöle wie Rizinusöl oder Sojaöl, ggf. gereinigt oder raffiniert, sowie Gemische daraus als flüssiger Träger verwendet.

Vorzugsweise werden für die Harzzubereitung unter b. auch Ester von Gemischen gesättigter und ungesättigter C14 bis C22-Fettsäuren pflanzlicher Herkunft mit einwertigen C1 bis C12-Alkoholen als flüssiger Träger verwendet.

Vorzugsweise werden für die Harzzubereitung unter b. Ester von Tallölfettsäuregemischen mit einwertigen C1 bis C8-Alkoholen als flüssiger Träger verwendet.

Besonders bevorzugt werden für die Harzzubereitung unter b. die Methyl-, Butyl- oder 2-Ethylhexylester von Tallölfettsäuregemsichen sowie Gemische daraus als flüssiger Träger verwendet.

Ganz besonders bevorzugt wird für die Harzzubereitung unter b. der Butylester von Tallölfettsäuregemischen als flüssiger Träger verwendet.

Vorzugsweise werden für die Harzzubereitung unter b. auch Gemische der beschriebenen Öle verwendet.

Die für die Harzzubereitung unter b. erfindungsgemäß verwendbaren Öle sind pflanzlicher Herkunft und können deshalb noch natürliche Verunreinigungen an Harzsäuren, teiloxidierten Harzsäuren, sog. Neutralstoffen und anderen unverseifbaren Bestandteilen enthalten.

Als **klebrigmachende Harze** für die erfindungsgemäßen Harzzubereitungen und deren Verwendung geeignet sind an sich bekannte Harze pflanzlicher Herkunft, die als komplexe Gemische von sog. Harzsäuren vorliegen. Solche natürlichen Harzsäuregemische bestehen im wesentlichen aus speziellen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure u.a., ggf. mit Minderbestandteilen an hydrierten, dehydrierten oder oxidierten Harzsäuren sowie sog. Neutralstoffen, wie Fettsäureestern, Terpenen, Terpenalkoholen und Kohlenwasserstoffen.

Harze dieser Art stammen hauptsächlich aus Baumharzen und werden im allgemeinen Sprachgebrauch als Balsamharz, Wurzelharz oder Tallharz sowie mit dem Sammelbegriff Kolophonium bezeichnet. Erfindungsgemäß relevant ist jedoch nicht die auslegungsfähige Trivialbezeichnung dieser Harze, sondern ihre grundsätzlich ähnliche, chemische Zusammensetzung und ihre pflanzliche Herkunft.

Als **klebrigmachende Harze** für die erfindungsgemäßen Harzzubereitungen und deren Verwendung geeignet sind weiter chemisch veränderte oder modifizierte Kolophoniumharze mit einem Schmelzpunkt zwischen 20 und 130°C. Hierbei handelt es sich insbesondere um Derivate von Kolophonium, die erhalten werden durch Dimerisierung, Polymerisierung, Disproportionierung oder Hydrierung und/oder durch homogene oder gemischte Veresterung mit ein-, zwei- oder mehrwertigen Alkoholen, wie z.B. mit Methanol, Ethylenglycol, Diethylenglycol, Triethylenglycol, Glycerin, Pentaerythrit u.a. sowie durch Veresterung von Harzsäurederivaten, wie z.B. Ester des Hydroabietylalkohols mit ein-oder mehrwertigen Alkoholen.

Vorzugsweise werden für die Harzzubereitung unter a. Kolophoniumharze verwendet.

Vorzugsweise werden für die Harzzubereitung unter a. dimerisierte, polymerisierte, disproportionierte und/oder hydrierte Kolophoniumharze verwendet.

Vorzugsweise werden für die Harzzubereitung unter a. Ester von Kolophoniumharzen mit ein- oder mehrwertigen Alkoholen verwendet.

Vorzugsweise werden für die Harzzubereitung unter a. Methyl-, Ethylenglycol., Diethylenglycol-, Triethylenglycol, Glycerin- oder Pentaerythritester von Kolophoniumharzen sowie Gemische daraus verwendet.

Vorzugsweise werden für die Harzzubereitung unter a. Triethylenglycol oder Glycerinester von Kolophoniumharzen sowie Gemische daraus verwendet.

Vorzugsweise werden für die Harzzubereitung unter a. mit Paraformaldehyd modifizierte Kolophoniumharze verwendet.

Vorzugsweise werden für die Harzzubereitung unter a. Harze mit einem Schmelzpunkt bzw. Erweichungsbereich von 20 bis 130 C verwendet.

Vorzugsweise werden die Harzzubereitung unter a. Harze mit einem Schmelzpunkt bzw. Erweichungsbereich von 30 bis 124 C verwendet.

Vorzugsweise werden für die Harzzubereitung unter a. Harze mit einem Schmelzpunkt bzw. Erweichungsbereich von 40 bis 118 C verwendet.

Vorzugsweise werden für die Harzzubereitung unter a. Harze mit einem Schmelzpunkt bzw. Erweichungsbereich von 50 bis 112 C verwendet.

Vorzugsweise werden für die Harzzubereitung unter a. Harze mit einem Schmelzpunkt bzw. Erweichungsbereich von 60 bis 106 C verwendet.

Vorzugsweise werden für die Harzzubereitung unter a. Harze mit einem Schmelzpunkt bzw. Erweichungsbereich von 70 bis 100 C verwendet.

Die beschriebenen, erfindungsgemäß verwendbaren Kolophoniumharze und Kolophoniumharz-Derivate werden im folgenden zur Vereinfachung kurz als Harze bezeichnet. Als geeignet haben sich auch Gemische dieser Harze erwiesen.

Die für die Harzzubereitung unter a. erfindungsgemäß verwendeten Harze sind z.T. pflanzlicher Herkunft und können deshalb noch natürliche Verunreinigungen an Fettsäuren, teiloxidierten Harzsäuren, sog. Neutralstoffen und anderen unverseifbaren Bestandteilen enthalten.

Den erfindungsgemäß verwendbaren Harzen können zusätzlich synthetische Kunstharze mit einem Schmelzpunkt bzw. Schmelzbereich zwischen 20 und 130°C zugesetzt werden, z.B. Cumaronharze, Cumaron-Indenharze, Phenolharze, Olefin/Ester-Copolymerisatharze, Ethylen-Vinylacetat-Copolymerisatharze, Olefin/Styrol-Copolymerisate, Polydienharze, Cyclopentadienharze und -kautschuke u.a. sowie deren Gemische. Die Erfindung wird durch eine solche Zumischung nicht tangiert, wenn die Kunstharze gegenüber den erfindungsgemäßen Harzen in einer Mindermenge vorliegen.

Die erfindunggemäßen Harzzubereitungen können zur Herstellung harzhaltiger Polymerdispersionen bzw. harzhaltiger Dispersionsklebstoffe verwendet werden. Als dafür geeignet haben sich Polymerdispersionen an sich bekannter Art erwiesen, die bei Temperaturen von 20 - 95 C eine ausreichende Scherstabilität aufweisen, z.B. wässerige Dispersionen von Homo-, Co- und Blockcopolymeren auf Basis von Acrylsäureestern, Methacrylsäureestern, Acrylsäure, Methacrylsäure, Acrylnitril, Vinylacetat, Vinylchlorid, Ethylen, Styrol, Butadien u.ä. sowie Gemische solcher Polymerdispersionen. Diese Aufzählung dient nur als Beispiel; die grundsätzliche Eignung anderer Polymerdispersionen läßt sich durch einfache Laborversuche ermitteln.

Die Herstellung der erfindungsgemäßen Harzzubereitungen erfolgt in der Weise, daß das Öl in einem heizbaren Mischbehälter vorgelegt und auf eine Temperatur im Bereich 20 - 130 °C, bevorzugt 70 bis 90°C, erwärmt wird. Unter Rühren werden die Harze portionsweise zugegeben und eingemischt. Die resultierende Zubereitung kann anschließend noch ca. 30 Minuten bis zu mehreren Stunden unter Rühren auf ca. 100 C erwärmt werden, um ggf. über einen Kühler flüchtige Inhaltsstoffe, z.B. Terpene, aus den Kolophoniumharzen, abzutrennen, falls das gewünscht wird. Die Einarbeitung der Harze kann je nach ihrer Löslichkeit auch bei Raumtemperatur erfolgen, wobei dann mit entsprechend längeren Rührzeiten zu rechnen ist.

Vorzugsweise wird das flüssige Trägermedium in einem heizbaren Mischbehälter vorgelegt, dann auf 30 bis 120 C erwärmt, dann werden unter Rühren die Harze eingemischt, und dann wird unter Beibehaltung von 30 bis 120 C so lange gerührt, bis eine homogene Mischung entstanden ist.

Vorzugsweise wird das flüssige Trägermedium in einem heizbaren Mischbehälter vorgelegt, dann auf 40 bis 110 C erwärmt, dann werden unter Rühren die Harze eingemischt, und dann wird unter Beibehaltung von 40 bis 110 C so lange gerührt, bis eine homogene Mischung entstanden ist.

Vorzugsweise wird das flüssige Trägermedium in einem heizbaren Mischbehälter vorgelegt, dann auf 50 bis 100 C erwärmt, dann werden unter Rühren die Harze eingemischt, und dann wird unter Beibehaltung von 50 bis 100 C so lange gerührt, bis eine homogene Mischung entstanden ist.

Vorzugsweise wird das flüssige Trägermedium in einem heizbaren Mischbehälter vorgelegt, dann auf 60 bis 95 C erwärmt, dann werden unter Rühren die Harze eingemischt, und dann wird unter Beibehaltung von 60 bis 95 C so lange gerührt, bis eine homogene Mischung entstanden ist.

Vorzugsweise wird das flüssige Trägermedium in einem heizbaren Mischbehälter vorgelegt, dann auf 70 bis 90 C erwärmt, dann werden unter Rühren die Harze eingemischt, und dann wird unter Beibehaltung von 70 bis 90 C so lange gerührt, bis eine homogene Mischung entstanden ist.

Vorzugsweise wird die fertig gemischte, homogene Harzzubereitung unter Rühren auf 90 bis 100°C erwärmt und 30 Minuten bis 5 Stunden bei dieser Temperatur gerührt, und ggf. werden flüchtige Bestandteile in geeigneter Weise abgeführt.

Vorzugsweise wird die fertig gemischte, homogene Harzzubereitung unter Rühren auf 30 bis 90°C, bevorzugt auf 60 bis 90°C, besonders bevorzugt auf 70 bis 90°C, erwärmt bzw. abgekühlt, dann in diesem Temperaturbereich sofort weiterverarbeitet oder zwischengelagert.

Die fertige, flüssige Harzzubereitung kann direkt in die in einem anderen Mischer vorgelegte Polymerdispersion bzw. Mischung der übrigen Klebstoffbestandteile eingemischt werden, sie kann jedoch auch abgekühlt und vor der Eindispergierung wiedererwärmt werden oder bei einer Temperatur zwischengelagert werden, bei der sie in flüssigem, förderfähigem Zustand verbleibt.

Die Einarbeitung der erfindungsgemäßen Harzzubereitungen in Dispersionsklebstoffe kann auf unterschiedliche, dem Fachmann geläufige Weisen erfolgen, so wie das schon bisher mit bekannten Harzzubereitungen praktiziert wird. Im einfachsten Fall wird dazu die Polymerdispersion, ggf. versehen mit Dispergier- und Entschäumungsmitteln sowie anderen Zusatzmitteln und Füllstoffen, vorgelegt und die flüssige Harzzubereitung portionsweise eindispergiert. Sowohl die vorgelegte Dispersionszubereitung als auch die Harzzubereitung kann bei der Eindispergierung in einem Temperaturbereich zwischen 20 und 95 C vorliegen. Die jeweils optimalen Einarbeitungstemperaturen sind abhängig von der Temperaturstabilität der Dispersionszubereitung und der Viskosität der Harzzubereitung. Die Dispergierung wird solange durchgeführt, bis eine homogene Klebstoffzubereitung vorliegt. Der Fachmann für Dispersionsklebstoffe ist mit dieser Arbeitsweise vertraut.

Vorzugsweise wird die noch harzfreie Dispersionszubereitung in einem heizbaren Mischbehälter vorgelegt, dann auf 20 bis 95 C erwärmt, dann wird unter Rühren die flüssige Harzzubereitung mit einer Temperatur von 30 bis 90 C zugegeben und so lange eindispergiert, bis eine homogene Klebstoffzubereitung entstanden ist.

Vorzugsweise wird nach der erfolgten Eindispergierung der Harzzubereitung die Dispersionsklebstoffzubereitung auf Raumtemperatur abgekühlt.

Es hat sich gezeigt, daß nur Harz-Öl-Kombinationen in bestimmten Mengenanteilen, sowohl in der Harzzubereitung selbst als auch in der Zusatzmenge zur Polymerdispersion, zu einer Lösung der weiter oben beschriebenen Aufgabenstellung führen. Diese Mengenverhältnisse können wiederum von der Art der Harze und Öle abhängen.

Nach der Lehre dieser Erfindung ergeben Harzzubereitungen, bei denen das Harz:Öl-Verhältnisanteil so hoch wie möglich liegt und sich innerhalb eines Temperaturbereichs von 20 bis 95°C gerade noch eine verfahrenstechnisch handhabbare, pump- und mischbare Viskosität ergibt, bei gleichem Mengenanteil in den daraus hergestellten Dispersionsklebstoffen eine höhere Anfangsklebrigkeit und Kohäsion im Vergleich zu Harzzubereitungen mit niedrigerem Harz:Öl-Verhältnis. Niedrigere Harz:Öl-Verhältnisse liefern Harzzubereitungen mit niedrigerer Viskosität und ergeben weichere Dispersionsklebstoffe mit geringerer Anfangsklebrigkeit und Kohäsion, aber mit längerer offenen Zeit. Grundsätzlich geeignet sind Harz:Öl-Verhältnisse im Bereich 90:10 bis 20:80 Gewichtsteile, bevorzugt sind Harz:Öl-Verhältnisse von 80:20 bis 60:40 Gewichtsteile. Die jeweils am besten geeigneten Harz:Öl-Verhältnisse hängen von der Art der Harze und Öle, von der gewünschten Viskosität der Harzzubereitung und von den gewünschten Eigenschaften des Dispersionsklebstoffs ab. Sie lassen sich auf einfache Weise durch Versuche bestimmen.

Nach der Lehre dieser Erfindung nimmt die in einem Dispersionsklebstoff erreichbare Anfangsklebrigkeit und Kohäsion bei gleichem Harz:Öl-Verhältnis mit der Menge der eingearbeiteten Harzzubereitung zu, sofern es sich um Harzzubereitungen handelt, deren Eigenklebrigkeit und Eigenkohäsion über der der nicht mit der Harzzubereitung versetzten Klebstoffzubereitung liegt. Geeignet im Sinne der Erfindung sind Mengenanteile der Harzzubereitung im Dispersionsklebstoff von 5 bis 60 %, wobei Mengenanteile von 20 bis 30 % bevorzugt werden.

Hohe Anfangsklebrigkeit und Kohäsion der erfindungsgemäß hergestellten Dispersionsklebstoffe läßt sich vor allem erreichen mit Harzzubereitungen aus Harzen, die selbst fest sind und einen Schmelzpunkt bzw. Erweichungsbreich zwischen 50 bis 130 C aufweisen. Harzzubereitungen aus Harzen, die bei Raumtemperatur selbst flüssig sind oder einen Schmelzpunkt bzw. Erweichungsbereich zwischen 25 - 50°C aufweisen ergeben weichere Dispersionsklebstoffe mit geringerer Anfangsklebrigkeit und geringerer Kohäsion. Erfindungsgemäß können durch entsprechende Auswahl der Harze oder durch Abmischung von Harzen mit unterschiedlichem Schmelzpunkt bzw. Erweichungsbereich Harzzubereitungen hergestellt werden, mit denen sich die Klebrigkeits- und Festigkeitseigenschaften der daraus hergestellten Dispersionsklebstoffe gezielt einstellen lassen.

Zusammenfassend können nach der Lehre dieser Erfindung flüssige Harzzubereitungen hergestellt werden, die sich gut in Dispersionsklebstoffe einarbeiten lassen, eine gezielte Einstellung der klebetechnischen Eigenschaften dieser Dispersionsklebstoffe erlauben und die keine durch den in der Harzubereitung enthaltenen flüssigen Träger zusätzlich verursachten VOC-Emissionen zur Folge haben. Die Erfindung beschreibt damit einen neuen Weg, mit dem sich die Nachteile der Verwendung von flüchtigen Trägermedien in Harzubereitungen vermeiden lassen und gleichzeitig die angestrebte Einstellung der Klebeeigenschaften von Dispersionsklebstoffen durch Harzzusatz vorteilhaft ermöglicht wird.

Weitere Merkmale, Aufgaben und Vorteile der Erfindung ergeben sich aus der folgenden Beschreibung von Beispielen.

### Beispiele:

Zur Verdeutlichung des erfindungsgemäßen Verfahrens werden Harzzubereitungen aus den nachfolgenden Harzen und Ölen hergestellt:

| **Harze:** | | |
|---|---|---|
| H1 = | Kolophonium Balsamharz WW/X | |
| H2 = | Kolophonium-Pentaerithrit-Ester | Handelsname: Dertoline P2 |
| H3 = | Kolophonium-Triethylenglycol-Ester | Handelsname: Tragum 2333 DI |
| H4 = | Kolophonium, polymersiert | Handelsname: Tragum PK 101 |
| H5 = | Kolophonium-Gycerin-Ester | Handelsname: Dertoline G2L |
| H6 = | Kolophonium, Paraformaldehyd-modifiziert | Handelsname: Tragum SP |
| H7 = | Kolophonium, disproportioniert | Handelsname: Resin 731 P |
| H8 = | Kolophonium, hydriert | Handelsname: Staybelite Resin |

| **Öle**: | |
|---|---|
| Ö1 = | Sojaöl |
| Ö2 = | Rizinusöl |
| Ö3 = | Rapsöl |
| Ö4 = | Leinöl |
| Ö5 = | Rüböl |
| Ö6 = | Sonnenblumenöl |
| Ö7 = | Tallölfettsäurebutylester |

### Herstellung der Harzzubereitungen:

Das Pflanzenöl wird vorgelegt und auf 80 C erwärmt. Das ggf. zerkleinerte Harz wird portionsweise im Verlauf von 1 Std. unter Rühren und Halten der Temperatur bei 80 C hinzugefügt. Danach wird eine weitere Stunde bei 80 C gerührt und anschließend die fertige Harzzubereitung beurteilt bzw. in eine Klebstoffzubereitung eingearbeitet.

### Maximaler Harzkonzentrationsbereich in der Harzzubereitung:

Nachdem die klebkraftverstärkende Wirkung der Harze im Vordergrund steht und das Öl nur als verflüssigende Hilfskomponente fungiert, werden aus den verschiedenen Harzen und Ölen Harzzubereitungen HZ hergestellt, die bei gleichzeitig noch handhabbarer Konsistenz eine Höchstmenge an Harz enthalten. Eine bei 80 C gerade noch ausreichend pump- und mischbare, honigähnliche Viskosität ergibt sich bei folgenden Harz-Öl-Verhältnissen:

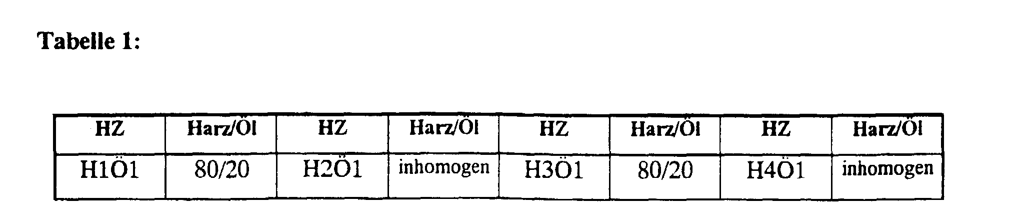

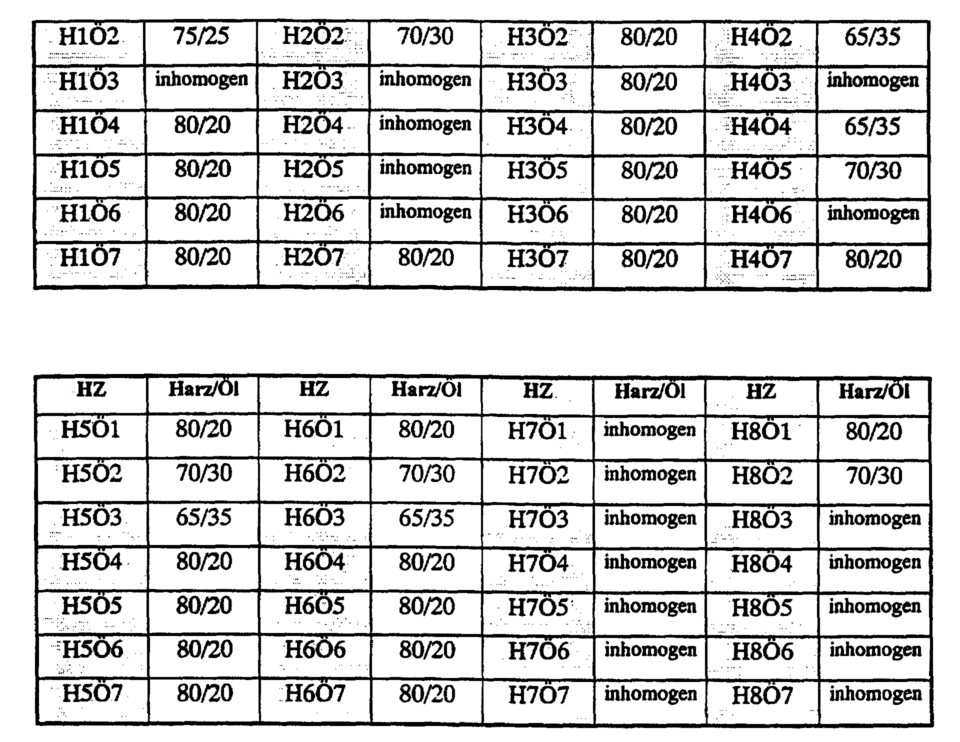

Die so hergestellten Harzzubereitungen HZ werden im folgenden nach Art der Harze und Öle und nach ihren Mengenanteilen in Gewichtsprozent als H1Ö1/8020, H1Ö2/7525 und sinngemäß so weiter bezeichnet

Aus den einzelnen Harz-Öl-Kombinationen werden weitergehend auch Konzentrationsreihen mit fallendem Harzanteil hergestellt, wie in Tabelle 2 am Beispiel H4Ö7, H5Ö5 und H6Ö4 dargestellt ist:

**Tabelle 2:**

| **HZ** | **Harz/Öl** | **HZ** | **Harz/Öl** | **HZ** | **Harz/Öl** |
|---|---|---|---|---|---|
| H4Ö7 | 80/20 | H5Ö5 | 80/20 | H6Ö4 | 80/20 |
| H4Ö7 | 60/40 | H5Ö5 | 60/40 | H6Ö4 | 60/40 |
| H4Ö7 | 40/60 | H5Ö5 | 40/60 | H6Ö4 | 40/60 |
| H4Ö7 | 20/80 | H5Ö5 | 20/80 | H6Ö4 | 20/80 |

Zur Verdeutlichung des Verhaltens der erfindungsgemäßen Harzzubereitungen in Dispersionsklebstoffen werden entsprechend Tabelle 3 folgende Klebstoff-Basisrezepturen zugrunde gelegt. Der Ausgleich unterschiedlichen Mengen zugesetzter Harzzubereitung sowie die Einstellung einer ähnlich verstreichbaren Klebstoffkonsistenz werden durch Veränderungen in den Mengenanteilen von Dolomitmehl und Wasser vorgenommen (Mengenangaben in Gewichtsprozent):

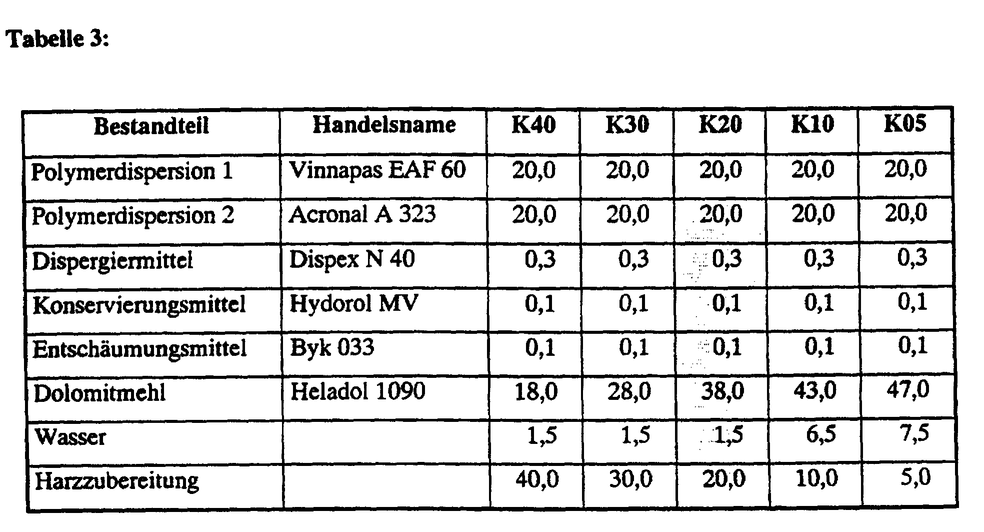

Zur Herstellung der Klebstoffe werden alle Bestandteile außer der Harzzubereitung miteinander homogen vorgemischt. Die so erhaltene Vormischung wird bei Raumtemperatur vorgelegt und die eine Temperatur von 80 C aufweisende flüssige Harzzubereitung unter starkem Rühren zügig bis zum Vorliegen einer homogenen Klebstoffzubereitung eindispergiert.

Zum Vergleich mit den so erhaltenen Klebstoffen werden 2 handelsübliche, unterschiedlich anfangsklebrige Dispersionsklebstoffe für textile Bodenbeläge, bezeichnet mit VK1 und VK2 herangezogen:

### Beurteilung der Klebstoffe

Beurteilt wird die Anfangsklebkraft der Klebstoffe. Dazu wird der Klebstoff mit der Zahnung B1 auf eine Spanplatte aufgetragen. Nach 10 Minuten Ablüftezeit werden jeweils drei 5 x 25 cm große Streifen eines Nadelvliesbelages (Fabrikat Girmes, Qualität 86705, Dessin 2533) in das Klebstoffbett eingelegt und mit einer 2 kg schweren Handwalze angewalzt. Die eingelegten Belagstreifen werden je mit einem Gewicht von 1 kg vollflächig beschwert. Nach 25, 40 bzw. 55 Minuten wird jeweils ein Streifen mittels einer 50-N-Federwaage senkrecht abgezogen und die angezeigte Kraft notiert. Die Ergebnisse sind in Tabelle 4 wiedergegeben (Abzugskraft in N):

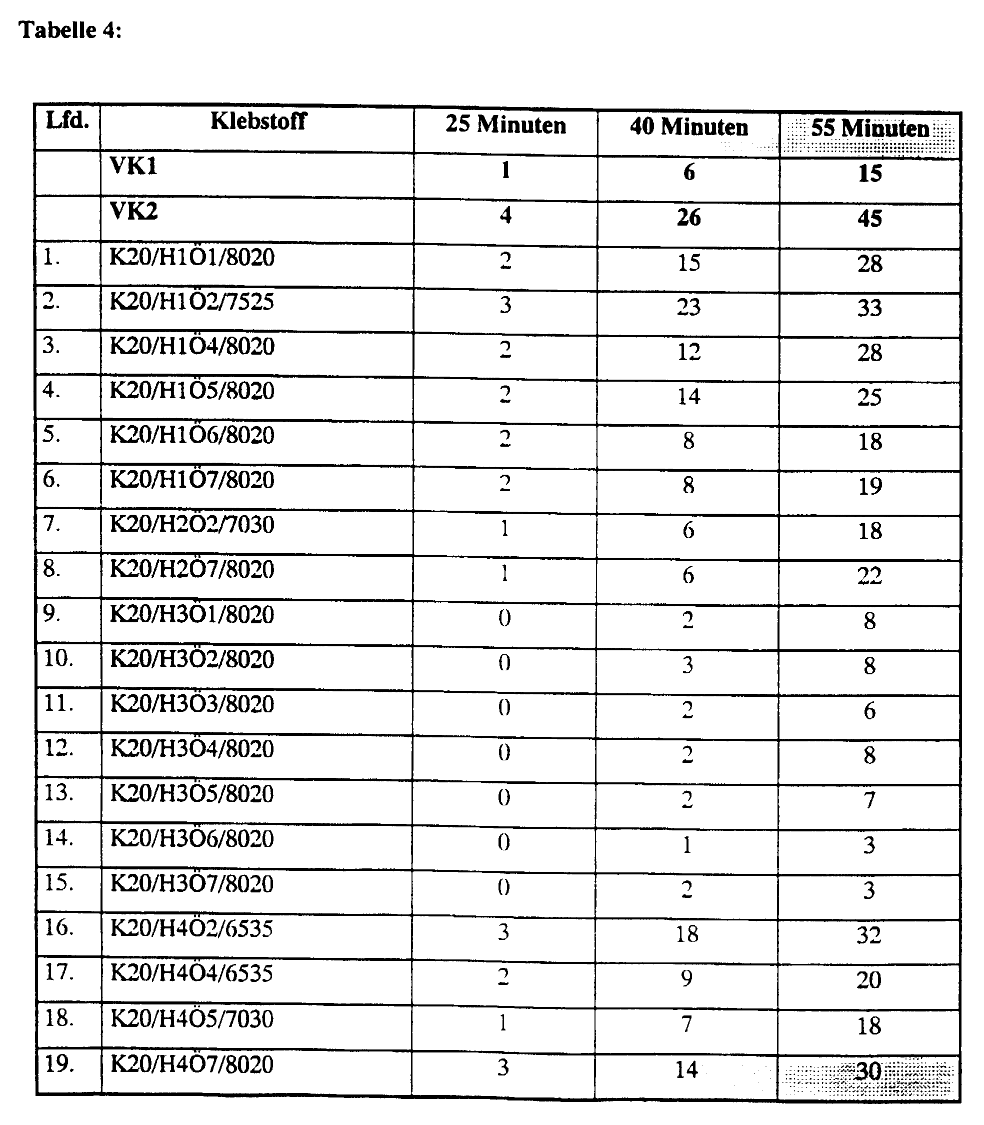

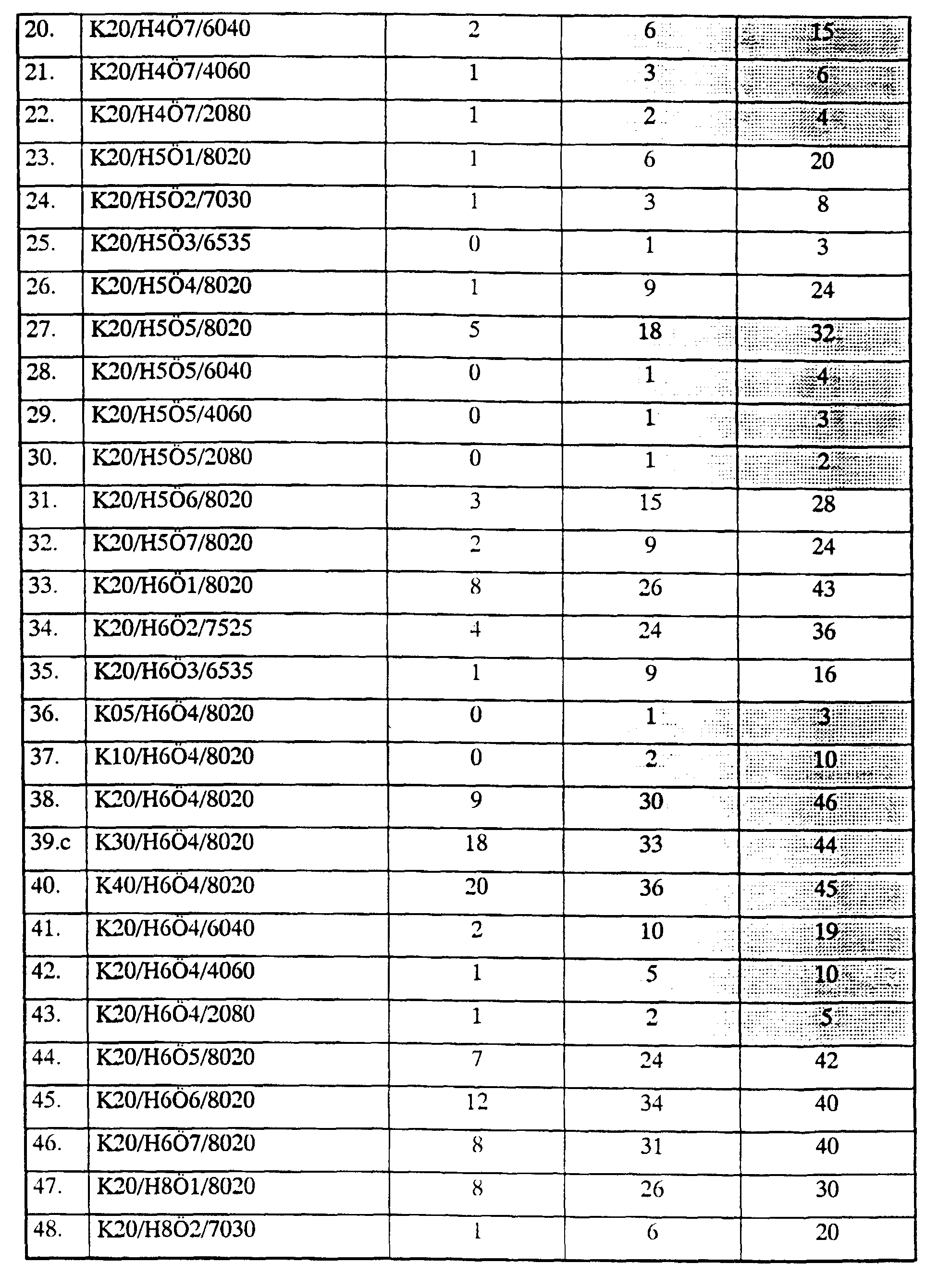

Die Ergebnisse zeigen, daß unter sonst gleichen Bedingungen bei manchen Harzarten die Art des Öls keinen allzu großen Einfluß ausübt (Nr. 1 bis 5, Nr. 7 bis 12), bei anderen Harzarten jedoch schon (Nr. 13 und 14, Nr. 19,20 und 24).

Die Ergebnisse der Nr.7 bis 12 zeigen, daß ein Harz, das selbst bei Raumtemperatur flüssig ist und als Weichharz bezeichnet wird, tendenziell sehr niedrige Werte ergibt, aber z.B. als Abmischkomponente mit anderen Harzen in Frage kommt.

Die Ergebnisse zeigen, daß die Werte mit sinkendem Harzanteil in der Harzzubereitung abnehmen bzw. daß grundsätzlich die höheren Werte mit Harzzubereitungen erreicht werden, in denen ein hoher Harzanteil vorliegt (Nr. 20 - 23, Nr. 30, 33 - 35).

Die Ergebnisse Nr. 28 bis 32 zeigen, daß bei gleicher Harzzubereitung die 25-Minuten-Werte mit steigendem Anteil der Harzzubereitung in der Klebstoffzubereitung ansteigen. Die 40- und 55-Minuten-Werte dagegen verändern sich ab 20 % Anteil an Harzzubereitung nur noch unwesentlich.

Die Ergebnisse zeigen insgesamt, daß sich mit den erfindungsgemäßen Harzzubereitungen Dispersionsklebstoffe z.B. hinsichtlich ihrer Anfangsklebrigkeit in einem weiten Bereich gezielt beeinflußen lassen. Dabei kann die Anfangsklebrigkeit handelsüblicher Klebstoffe in den meisten Fällen erreicht, vielfach sogar übertroffen werden. Durch Auswahl entsprechender Harzzubereitungen, ggf. auch durch Abmischungen dieser Harzzubereitungen bzw. deren Herstellung unter Verwendung gemischter Harze lassen sich nicht nur die Anfangsklebrigkeit, sondern auch andere klebetechnische Kriterien, z.B. offene Zeit, Scher-, End- und Wärmefestigkeit, gemäß der Lehre dieser Erfindung gezielt einstellen.

Die technischen Eigenschaften der Dispersionsklebstoffe lassen sich darüber hinaus durch eine dem Fachmann geläufige Auswahl der Polymerdispersionen und Additive weiter beeinflussen.

### VOC-Emissionsverhalten:

Zum Vergleich des VOC-Emissionsverhaltens werden nach bekanntem Stand der Technik unter Verwendung der mittel- bis schwerflüchtigen, flüssigen Trägermedien BDGA, BDG und PhG die Harzzubereitungen HZ1 und HZ2 sowie erfindungsgemäß unter Verwendung von Sojaöl und Ricinusöl die Harzzubereitungen HZ3 und HZ4 hergestellt (Tabelle 5):

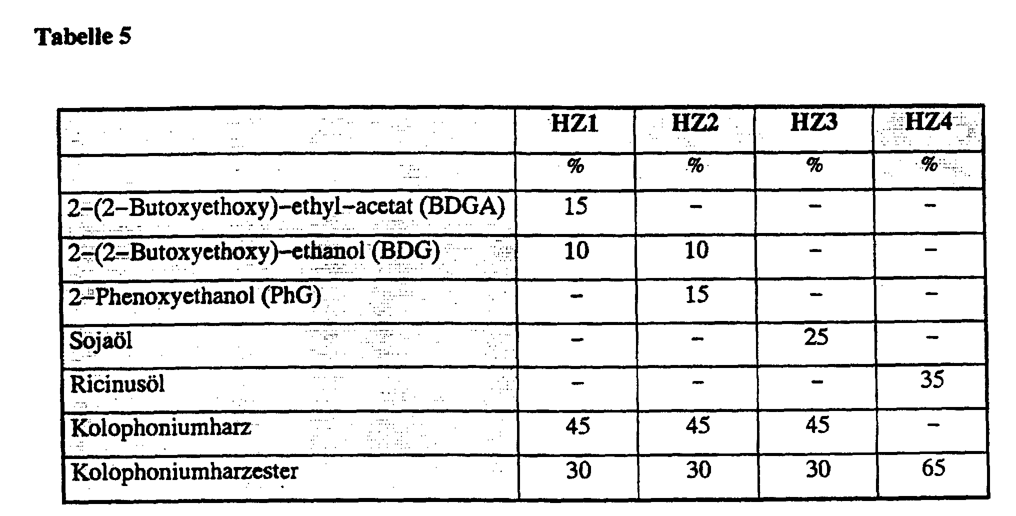

Mit diesen Harzzubereitungen werden gemäß dem bereits oben beschriebenen Verfahren Dispersionsklebstoffe entsprechend den Rezepturen in Tabelle 6 hergestellt (Mengenangaben in Gewichtsprozent):

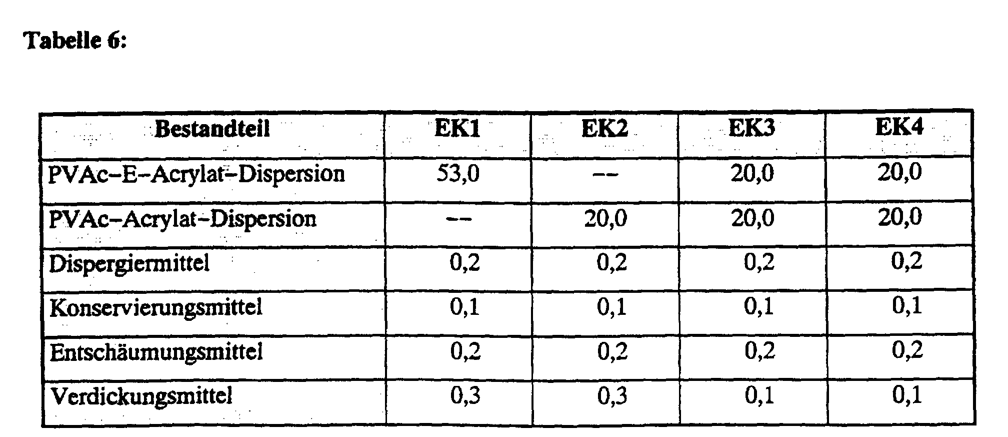

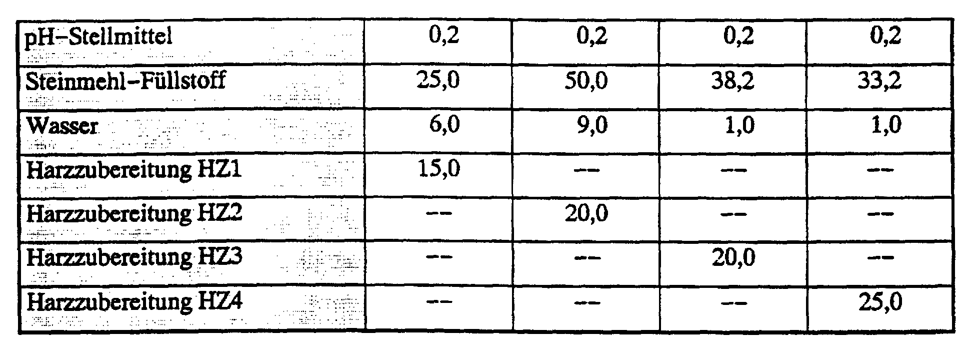

Die Rezepturen sind mit Ausnahme der darzustellenden Variationsparameter nicht identisch zusammengesetzt, weil gleichzeitig einige praxisübliche Unterschiede in der Funktionsweise von Klebstoffen dargestellt werden sollen. So stellt Klebstoff EK1 einen Haftklebstoff mit hohem Polymeranteil und relativ geringem Harzanteil (Polymer:Harz ca. 3:1), Klebstoff EK2 einen typischen hochgefüllten Naßklebstoff mit geringerem Polymeranteil und höherem Harzanteil (Polymer:Harz ca. 1:1) dar. Die erfindungsgemäß hergestellten Klebstoffe EK3 und EK4 sind Naßklebstoffe mit einem dazwischen liegenden Polymer-Harz-Verhältnis von 1.5 bzw. 2:1.

### Emissions-Prüfmethodik:

Die Herstellung der Prüfkörper und die Emissionsmessung erfolgt unter gleichen, definierten Bedingungen. Als Prüfkörper dient eine auf einen inerten Glasträger aufgetragene und 14 Tage bei Normklima 23/50 vorgelagerte Klebstoffschicht. Geprüft wird in einer Emissionsprüfkammer mit einem Volumen von 0.18 m³. Die Kammer wird mit hochreiner Luft durchspült. Zur Identifizierung der von der Klebstoffschicht emittierten Einzelstoffe wird das Spülgas durch Aktivkohle geleitet. Die an der Aktivkohle adsorbierten VOC werden mit geeigneten Lösungsmitteln desorbiert und mittels GC/MS-Kopplung identifiziert. In einem weiteren Analysengang wird die Summe der mittels GC/FID erfaßten Signale in Anlehnung an TRGS 404 als Toluol-Equivalent quantifiziert, ausgedrückt in [µg/m²h]. Die Ergebnisse zeigt Tabelle 7:

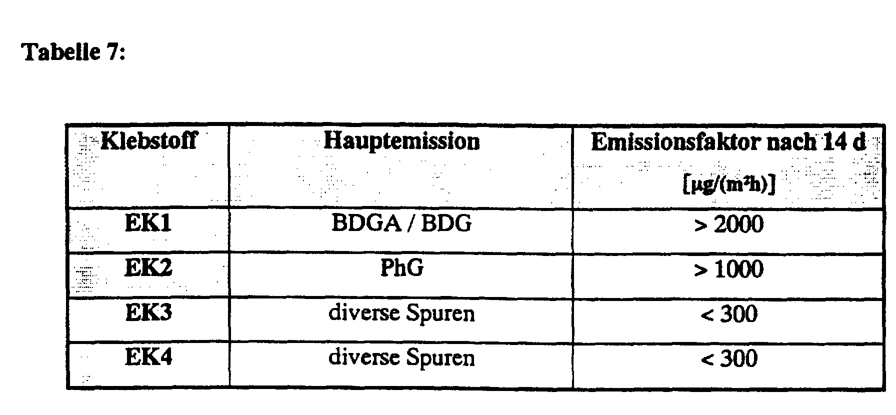

Das Ergebnis zeigt, daß die erfindungsgemäß hergestellten Harzzubereitungen im Gegensatz zum bekannten Stand der Technik die Herstellung sehr emissionsarmer Dispersionsklebstoffe erlauben. Nach z.Zt. herrschender Auffassung fachkompetenter Kreise gelten bei Baustoffen Emissionsfaktoren unter 300 µg/m²h als weitgehend unbedenklich. Mittels des erfindungsgemäßen Verfahrens können demnach Klebstoffe hergestellt werden, die einen Emissionsfaktor unter diesem Wert aufweisen, während die nach bekannter Art hergestellten Klebstoffe deutlich darüberliegende Werte aufweisen.

Die erfindungsgemäß hergestellten Klebstoffe EK3 und EK4 zeigen gegenüber EK1 und EK2, daß die Gesamtemissionen auch bei vergleichbarer Menge an Harzzubereitung sofort drastisch nach unten gehen und letztlich nur noch von den diversen flüchtigen Spurenbestandteilen der verwendeten Harze (Terpene) und Polymerdispersionen (Monomere) verursacht werden. Bei Auswahl geeigneter terpenarmer (desodorierter) Harze und monomerarmer Dispersionen kann nach dem erfindungsgemäßem Verfahren der Emissionsfaktor deshalb noch weiter reduziert werden in Bereiche < 200 µg/m²h.

Bei den beiden Klebstoffen EK1 und E2 dagegen werden erhebliche zusätzliche VOC-Emissionen durch die bei der Herstellung der Harzzubereitung verwendeten flüchtigen Trägerstoffe verursacht.

Zusammenfassend ist festzustellen, daß erfindungsgemäß Harzzubereitungen gefunden werden konnten, die
1. eine für die Einarbeitung in Dispersionsklebstoffe erforderliche flüssige Konsistenz aufweisen
2. eine gezielte Einstellung bestimmter klebetechnischer Eigenschaften von Dispersionsklebstoffen, z.B. der Anfangsklebrigkeit, erlauben
3. nicht oder nur unwesentlich zu von dem flüssigen Trägermedium der Harzzubereitung verursachten VOC-Emissionen führen.
4. aufgrund ihrer pflanzlichen Herkunft als erhöht umweltverträglich zu betrachten sind.

Bevorzugte Ausführungsformen der Erfindung sind:
Dispersionsklebstoffe, dadurch gekennzeichnet, daß sie 8 bis 55 Gewichtsprozent Harzzubereitung enthalten;
Dispersionsklebstoffe, dadurch gekennzeichnet, daß sie 10 bis 50 Gewichtsprozent Harzzubereitung enthalten;
Dispersionsklebstoffe, dadurch gekennzeichnet, daß sie 12 bis 45 Gewichtsprozent Harzzubereitung enthalten;
Dispersionsklebstoffe, dadurch gekennzeichnet, daß sie 14 bis 40 Gewichtsprozent Harzzubereitung enthalten;
Dispersionsklebstoffe, dadurch gekennzeichnet, daß sie 16 bis 36 Gewichtsprozent Harzzubereitung enthalten;
Dispersionsklebstoffe, dadurch gekennzeichnet, daß sie 18 bis 33 Gewichtsprozent Harzzubereitung enthalten;
Dispersionsklebstoffe, dadurch gekennzeichnet, daß sie 20 bis 30 Gewichtsprozent Harzzubereitung enthalten;
Dispersionsklebstoffe, dadurch gekennzeichnet, daß sie Harzzubereitungen aus 30 - 88 Gewichtsprozent Harzen und 70 bis 12 Gewichtsprozent flüssigen Ölen enthalten;
Dispersionsklebstoffe, dadurch gekennzeichnet, daß sie Harzzubereitungen aus 40 - 86 Gewichtsprozent Harzen und 60 bis 14 Gewichtsprozent flüssigen Ölen enthalten;
Dispersionsklebstoffe, dadurch gekennzeichnet, daß sie Harzzubereitungen aus 50 - 84 Gewichtsprozent Harzen und 50 bis 16 Gewichtsprozent flüssigen Ölen enthalten;
Dispersionsklebstoffe, dadurch gekennzeichnet, daß sie Harzzubereitungen aus 60 - 82 Gewichtsprozent Harzen und 40 bis 18 Gewichtsprozent flüssigen Ölen enthalten;
Dispersionsklebstoffe, dadurch gekennzeichnet, daß sie Harzzubereitungen aus 65 - 80 Gewichtsprozent Harzen und 35 bis 20 Gewichtsprozent flüssigen Ölen enthalten.;
Dispersionsklebstoffe, dadurch gekennzeichnet, daß als Harze Kolophoniumharze in Form von Balsamharzen, Wurzelharzen und/oder Tallharzen verwendet werden;
Dispersionsklebstoffe, dadurch gekennzeichnet, daß als Harze Kolophoniumharze in Form ihrer hydrierten, dehydrierten, disproportionierten und/oder polymersierten Derivate verwendet werden;
Dispersionsklebstoffe, dadurch gekennzeichnet, daß als Harze Ester von Kolophoniumharzen und/oder ihrer hydrierten, dehydrierten, disproportionierten und/oder polymersierten Derivate mit ein- oder mehrwertigen Alkoholen verwendet werden;
Dispersionsklebstoffe, dadurch gekennzeichnet, daß als Harze Methyl-, Butyl-, Ethylenglycol-, Diethylenglycol-, Triethylenglycol-, Glycerin- und/oder Pentaerythrit-Ester von Kolophoniumharzen und/oder ihrer hydrierten, dehydrierten, disproportionierten und/oder polymersierten Derivate verwendet werden;
Dispersionsklebstoffe, dadurch gekennzeichnet, daß als Harze mit Paraformaldehyd modifizierte Kolophoniumharze und/oder mit Paraformaldehyd modifizierte, hydrierte, dehydrierte, disproportionierte und/oder polymersierte Derivate des Kolophoniums verwendet werden;
Dispersionsklebstoffe, dadurch gekennzeichnet, daß als Harze Harzsäuregemische aus im wesentlichen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure, und/oder deren hydrierten, dehydrierten oder oxidierten, disproportionierten und/oder polymerisierten Derivaten verwendet werden;
Dispersionsklebstoffe, dadurch gekennzeichnet, daß als Harze Ester von Harzsäuregemischen aus im wesentlichen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure, und/oder deren hydrierten, dehydrierten oder oxidierten, disproportionierten und/oder polymerisierten Derivaten, mit ein- oder mehrwertigen Alkoholen verwendet werden;
Dispersionsklebstoffe, dadurch gekennzeichnet, daß als Harze mit Paraformaldehyd modifizierte Harzsäuregemische aus im wesentlichen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure, und/oder mit Paraformaldehyd modifizierte, hydrierte, dehydrierte oder oxidierte disproportionierte und/oder polymerisierte Harzsäurederivate verwendet werden;
Dispersionsklebstoffe, dadurch gekennzeichnet, daß als Harze bei Raumtemperatur flüssige Harze verwendet werden;
Dispersionsklebstoffe, dadurch gekennzeichnet, daß als Harze Gemische der beschriebenen Harze verwendet werden;
Dispersionsklebstoffe, dadurch gekennzeichnet, daß als Trägermedium-Öle natürliche Glycerinestergemische von im wesentlichen C14 bis C22-Fettsäuren verwendet werden;
Dispersionsklebstoffe, dadurch gekennzeichnet, daß als Trägermedium-Öle natürliches, ggf. raffiniertes oder gereinigtes Leinöl, Rapsöl, Ricinusöl, Rüböl, Sojaöl, Sonnenblumenöl oder deren Gemische verwendet werden;
Dispersionsklebstoffe, dadurch gekennzeichnet, daß als Trägermedium-Öle natürliches, ggf. raffiniertes oder gereinigtes Rapsöl, Ricinusöl oder Sojaöl oder deren Gemische verwendet werden;
Dispersionsklebstoffe, dadurch gekennzeichnet, daß als Trägermedium-Öl natürliches, ggf. raffiniertes oder gereinigtes Rapsöl verwendet wird;
Dispersionsklebstoffe, dadurch gekennzeichnet, daß als Trägermedium-Öl natürliches, ggf. raffiniertes oder gereinigtes Ricinusöl verwendet wird;
Dispersionsklebstoffe, dadurch gekennzeichnet, daß als Trägermedium-Öl natürliches, ggf. raffiniertes oder gereinigtes Sojaöl verwendet wird;
Dispersionsklebstoffe, dadurch gekennzeichnet, daß als Trägermedium-Öle Ester von Gemischen gesättigter und ungesättigter C14 bis C22-Fettsäuren pflanzlicher Herkunft mit einwertigen C1 bis C12-Alkoholen verwendet werden;
Dispersionsklebstoffe, dadurch gekennzeichnet, daß als Trägermedium-Öle Ester von Tallölfettsäuregemischen mit einwertigen C1 bis C8-Alkoholen verwendet werden;
Dispersionsklebstoffe, dadurch gekennzeichnet, daß als Trägermedium-Öle die Methyl-, Butyl- oder 2-Ethylhexylester von Tallölfettsäuregemsichen sowie Gemische daraus verwendet werden;
Dispersionsklebstoffe, dadurch gekennzeichnet, daß als Trägermedium-Öl der Butylester von Tallölfesttsäuregemischen verwendet wird;
Dispersionsklebstoffe, dadurch gekennzeichnet, daß als Trägermedium-Öle Gemische der beschriebenen Öle verwendet werden;

Verfahren zur Herstellung der Harzzubereitungen, dadurch gekennzeichnet, daß das flüssige Trägermedium in einem heizbaren Mischbehälter vorgelegt wird, dann auf 20 bis 130 C erwärmt wird, dann unter Rühren die Harze eingemischt werden und dann unter Beibehaltung von 20 bis 130°C so lange gerührt wird, bis eine homogene Mischung entstanden ist.

## Patentansprüche

1. Dispersionsklebstoffe, enthaltend an sich bekannte wäßrige Polymerdispersionen und gegebenenfalls zusätzliche an sich bekannte Additive,
dadurch gekennzeichnet,
daß sie eine Harzzubereitung enthalten, bestehend aus einer Mischung aus
a. 20 bis 90 Gew.-% Harzen mit einem Schmelzpunkt bzw. Erweichungsbereich von 20 bis 130 °C in Form von natürlichen und/oder modifizierten Kolophoniumharzen und/oder Kolophoniumharzestern und/oder aus Kolophonium gewonnenen Harzsäuregemischen und/oder deren Estern und
b. 80 bis 10 Gew.-% bei Raumtemperatur flüssigen Ölen als Trägermedium für die unter a. aufgeführten Harze, bestehend aus natürlichen Gemischen der Glycerinester von gesättigten und/oder ungesättigten und/oder hydroxylgruppenhaltigen C14 - C22-Fettsäuren pflanzlicher Herkunft, und/oder Estern von Gemischen gesättigter und/oder ungesättigter C14 - C22-Fettsäuren pflanzlicher Herkunft mit einwertigen C1 bis C12-Alkoholen.

2. Dispersionsklebstoffe nach Anspruch 1,
bestehend aus
a. 5 - 60 Gew.-% der Harzzubereitung nach Anspruch 1 und
b. 40 - 95 Gew.-% wäßrigen Polymerdispersionen bzw. -emulsionen an sich bekannter Art.

3. Dispersionsklebstoffe nach Anspruch 1 oder 2,
dadurch gekennzeichnet,
daß die aus 5 - 60 Gew.% der Harzzubereitung nach Anspruch 1 und 40 - 95 Gew.% wäßrigen Polymerdispersionen bzw. -emulsionen an sich bekannter Art bestehenden Dispersionsklebstoffe zusätzliche Dispergiermittel, Entschäumungsmittel, Konservierungsmittel, Verdickungsmittel, Stellmittel, Additive und Füllstoffe ebenfalls an sich bekannter Art enthalten.

4. Dispersionsklebstoffe nach einem oder mehreren der vorhergehenden Ansprüche,
dadurch gekennzeichnet,
daß sie 8 bis 55 Gew.%, bevorzugt 10 bis 50 Gew.-% Harzzubereitung enthalten.

5. Dispersionsklebstoffe nach einem oder mehreren der vorhergehenden Ansprüche,
dadurch gekennzeichnet,
daß sie 12 - 45 Gew.%, bevorzugt 14 - 40 Gew.% Harzzubereitung enthalten.

6. Dispersionsklebstoffe nach einem oder mehreren der vorhergehenden Ansprüche,
dadurch gekennzeichnet,
daß sie 16 - 36 Gew.%, bevorzugt 18 - 33 Gew.% Harzzubereitung enthalten.

7. Dispersionsklebstoffe nach einem oder mehreren der vorhergehenden Ansprüche,
dadurch gekennzeichnet,
daß sie 20 - 30 Gew.% Harzzubereitung enthalten.

8. Dispersionsklebstoffe nach einem oder mehreren der vorhergehenden Ansprüche
dadurch gekennzeichnet,
daß sie Harzzubereitungen aus 30 bis 88 Gew.-% Harzen und 70 bis 12 Gew.-% flüssigen Ölen enthalten.

9. Dispersionsklebstoffe nach einem oder mehreren der vorhergehenden Ansprüche,
dadurch gekennzeichnet,
daß sie Harzzubereitungen aus 40 bis 86 Gew.-% Harzen und 60 bis 14 Gew.-% flüssigen Ölen enthalten.

10. Dispersionsklebstoffe nach einem oder mehreren der vorhergehenden Ansprüche,
dadurch gekennzeichnet,
daß sie Harzzubereitungen aus 50 bis 84 Gew.-% Harzen und 50 bis 16 Gew.-% flüssigen Ölen enthalten.

11. Dispersionsklebstoffe nach einem oder mehreren der vorhergehenden Ansprüche,
dadurch gekennzeichnet,
daß sie Harzzubereitungen aus 60 bis 82 Gew.-% Harzen und 40 bis 18 Gew.-% flüssigen Ölen enthalten.

12. Dispersionsklebstoffe nach einem oder mehreren der vorhergehenden Ansprüche,
dadurch gekennzeichnet,
daß sie Harzzubereitungen aus 65 bis 80 Gew.-% Harzen und 35 bis 20 Gew.-% flüssigen Ölen enthalten.

13. Dispersionsklebstoffe nach einem oder mehreren der vorhergehenden Ansprüche,
dadurch gekennzeichnet,
daß als Harze Kolophoniumharze in Form von Balsamharzen, Wurzelharzen und/oder Tallharzen oder
daß als Harze Kolophoniumharze in Form ihrer hydrierten, dehydrierten, disproportionierten und/oder polymerisierten Derivate oder
daß als Harze Ester von Kolophoniumharzen und/oder ihrer hydrierten, dehydrierten, disproportionierten und/oder polymerisierten Derivate mit ein- oder mehrwertigen Alkoholen oder
daß als Harze Methyl-, Butyl-, Ethylenglycol-, Diethylenglycol-, Triethylenglycol-, Glycerin- und/oder Pentaerythrit-Ester von Kolophoniumharzen und/oder ihrer hydrierten, dehydrierten, disproportionierten und/oder polymerisierten Derivate oder
daß als Harze mit Paraformaldehyd modifizierte Kolophoniumharze und/oder mit Paraformaldehyd modifizierte, hydrierte, dehydrierte, disproportionierte und/oder polymerisierte Derivate von Kolophoniumharzen verwendet werden.

14. Dispersionsklebstoffe nach einem oder mehreren der vorhergehenden Ansprüche,
dadurch gekennzeichnet,
daß als Harze Harzsäuregemische aus im wesentlichen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure und/oder deren hydrierten, dehydrierten, oxidierten, disproportionierten und/oder polymerisierten Derivaten oder daß als Harze Ester von Harzsäuregemischen aus im wesentlichen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure und/oder deren hydrierten, dehydrierten, oxidierten, disproportionierten und/oder polymerisierten Derivaten, mit ein- oder mehrwertigen Alkoholen oder
daß als Harze mit Paraformaldehyd modifizierte Harzsäuregemische aus im wesentlichen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure und/oder deren mit Paraformaldehyd modifizierte, hydrierte, dehydrierte, oxidierte, disproportionierte und/oder polymerisierte Derivate verwendet werden oder daß als Harze Gemische der vorstehenden Harze verwendet werden.

15. Dispersionsklebstoffe nach einem oder mehreren der vorhergehenden Ansprüche,
dadurch gekennzeichnet,
daß als Harze Harze mit einem Schmelzpunkt bzw. Erweichungsbereich von 30 bis 124 °C verwendet werden.

16. Dispersionsklebstoffe nach einem oder mehreren der vorhergehenden Ansprüche,
dadurch gekennzeichnet,
daß als Harze Harze mit einem Schmelzpunkt bzw. Erweichungsbereich von 40 bis 118 °C, bevorzugt 50 bis 112 °C verwendet werden.

17. Dispersionsklebstoffe nach einem oder mehreren der vorhergehenden Ansprüche,
dadurch gekennzeichnet,
daß als Harze Harze mit einem Schmelzpunkt bzw. Erweichungsbereich von 60 bis 106 °C, bevorzugt 70 bis 100 °C verwendet werden.

18. Dispersionsklebstoffe nach einem oder mehreren der vorhergehenden Ansprüche,
dadurch gekennzeichnet,
daß als Harze bei Raumtemperatur flüssige Harze verwendet werden oder daß als Harze Gemische der vorstehend beanspruchten Harze verwendet werden.

19. Dispersionsklebstoffe nach einem oder mehreren der vorhergehenden Ansprüche,
dadurch gekennzeichnet,
daß als Trägermedium-Öle natürliche Glycerinestergemische von im wesentlichen C₁₄ - C₂₂-Fettsäuren verwendet werden.

20. Dispersionsklebstoffe nach einem oder mehreren der vorhergehenden Ansprüche,
dadurch gekennzeichnet,
daß als Trägermedium-Öle natürliches, ggf. raffiniertes oder gereinigtes Leinöl, Rapsöl, Rizinusöl, Rüböl, Sojaöl, Sonnenblumenöl oder deren Gemische verwendet werden.

21. Dispersionsklebstoffe nach einem oder mehreren der vorhergehenden Ansprüche,
dadurch gekennzeichnet,
daß als Trägermedium-Öle natürliches, ggf. raffiniertes oder gereinigtes Rapsöl, Rizinusöl oder Sojaöl oder deren Gemische verwendet werden.

22. Dispersionsklebstoffe nach einem oder mehreren der vorhergehenden Ansprüche,
dadurch gekennzeichnet,
daß als Trägermedium-Öl natürliches, ggf. raffiniertes oder gereinigtes Rapsöl verwendet wird.

23. Dispersionsklebstoffe nach einem oder mehreren der vorhergehenden Ansprüche,
dadurch gekennzeichnet,
daß als Trägermedium-Öl natürliches, ggf. raffiniertes oder gereinigtes Rizinusöl verwendet wird.

24. Dispersionsklebstoffe nach einem oder mehreren der vorhergehenden Ansprüche,
dadurch gekennzeichnet,
daß als Trägermedium-Öl natürliches, ggf. raffiniertes oder gereinigtes Sojaöl verwendet wird.

25. Dispersionsklebstoffe nach einem oder mehreren der vorhergehenden Ansprüche,
dadurch gekennzeichnet,
daß als Trägermedium-Öle Ester von Gemischen gesättigter und ungesättigter C14 bis C22-Fettsäuren pflanzlicher Herkunft mit einwertigen C1 bis C12-Alkoholen verwendet werden.

26. Dispersionsklebstoffe nach einem oder mehreren der vorhergehenden Ansprüche,
dadurch gekennzeichnet,
daß als Trägermedium-Öle Ester von Tallölfettsäuregemischen mit einwertigen C1 bis C8-Alkoholen verwendet werden.

27. Dispersionsklebstoffe nach einem oder mehreren der vorhergehenden Ansprüche,
dadurch gekennzeichnet,
daß als Trägermedium-Öle die Methyl-, Butyl- oder 2-Ethylhexyl-Ester von Tallölfettsäuregemischen allein oder im Gemisch verwendet werden.

28. Dispersionsklebstoffe nach einem oder mehreren der vorhergehenden Ansprüche,
dadurch gekennzeichnet,
daß als Trägermedium-Öl der Butyl-Ester von Tallölfettsäuregemischen verwendet wird.

29. Dispersionsklebstoffe nach einem oder mehreren der vorhergehenden Ansprüche,
dadurch gekennzeichnet,
daß als Trägermedium-Öle Gemische der beschriebenen Öle verwendet werden.

30. Verfahren zur Herstellung der Harzzubereitungen nach einem oder mehreren der vorhergehenden Ansprüche,
dadurch gekennzeichnet,
daß das flüssige Trägermedium in einem heizbaren Mischbehälter vorgelegt wird, dann auf 20 bis 130 °C erwärmt wird, dann unter Rühren die Harze eingemischt werden und dann unter Beibehaltung von 20 bis 130 °C so lange gerührt wird, bis eine Mischung, vorzugsweise homogene Mischung, entstanden ist, und daß zur Herstellung einer Klebstoffzubereitung, vorzugsweise homogenen Klebstoffzubereitung, die noch harzfreie Dispersionszubereitung in einem heizbaren Mischbehälter vorgelegt wird, dann auf 20 bis 90°C erwärmt wird, dann unter Rühren die flüssige Harzzubereitung mit einer Temperatur von 30 bis 90 °C zugegeben und so lange eindispergiert wird, bis eine Klebstoffzubereitung, vorzugsweise homogene Klebstoffzubereitung, entstanden ist.

31. Verfahren zur Herstellung der Harzzubereitungen nach einem oder mehreren der vorhergehenden Ansprüche,
dadurch gekennzeichnet,
daß das flüssige Trägermedium in einem heizbaren Mischbehälter vorgelegt wird, dann auf 70 bis 90 °C erwärmt wird, dann unter Rühren die Harze eingemischt werden und dann unter Beibehaltung von 70 - 90 °C so lange gerühr wird, bis eine Mischung, vorzugsweise homogene Mischung, entstanden ist, und daß zur Herstellung einer Klebstoffzubereitung, vorzugsweise homogenen Klebstoffzubereitung, die noch harz freie Dispersionszubereitung in einem heizbaren Mischbehälter vorgelegt wird, dann auf 20 bis 90 °C erwärmt wird, dann unter Rühren die flüssige Harzzubereitung mit einer Temperatur von 30 bis 90 °C zugegeben und so lange eindispergiert wird, bis eine Klebstoffzubereitung, vorzugsweise homogene Klebstoffzubereitung, entstanden ist.

32. Verwendung der Harzzubereitung nach einem oder mehreren der vorhergehenden Ansprüche zur Herstellung von harzhaltigen, emissionsarmen Dispersionsklebstoffen.

33. Verwendung der Dispersionsklebstoffe nach einem oder mehreren der vorhergehenden Ansprüche zum Kleben von Flächengebilden aus der Gruppe Keramik, Stein, Holz, Kunststoffe, Textilien, Papier, Karton.

34. Verwendung der Dispersionsklebstoffe nach einem oder mehreren der vorhergehenden Ansprüche zum Kleben von Boden-, Wand- und Deckenbelägen aus Keramik, PVC, Polyolefin, Gummi, Textilien, Linoleum, Kork, Holzwerkstoffen in Innenräumen.

## Claims

1. Dispersion adhesives, containing aqueous polymer dispersions known per se and optionally additional additives known per se,
characterized in that
said dispersion adhesives contain a resin preparation consisting of a mixture of
a. 20 to 90 % by wt. of resins having a melting point or a softening range of 20 to 130°C in the form of natural and/or modified colophonium resins and/or colophonium resin esters and/or resin acid mixtures obtained from colophonium, and/or the esters thereof; and
b. 80 to 10 % by wt. of oils being liquid at room temperature as a carrier medium for the resins mentioned under a., consisting of natural mixtures of glycerol esters of saturated and/or unsaturated and/or hydroxyl group-containig C14-C22 fatty acids of vegetable origin, and/or esters of mixtures of saturated and/or unsaturated C14-C22 fatty acids of vegetable origin with monovalent C1 to C12 alcohols.

2. Dispersion adhesives according to claim 1, consisting of:
a. 5 - 60 % by wt. of the resin preparation according to claim 1; and
b. 40 - 95 % by wt. of aqueous polymer dispersions or emulsions known per se.

3. Dispersion adhesives, according to claim 1 or 2,
characterized in that,
the dispersion adhesives consisting of 5 to 60 % by wt. of the resin preparation according to claim 1 and of 40 to 95 % by wt. of aqueous polymer dispersions or emulsions known per se are containing additional dispersants, anti foaming agents, preservatives, thickeners, regulating agents, additives and fillers also known per se.

4. Dispersion adhesives, according to one or more of the preceeding claims,
characterized in that
they contain 8 to 55% by wt., preferably 10 to 50% by wt., of the resin preparation.

5. Dispersion adhesives, according to one or more of the preceeding claims,
characterized in that
they contain 12 to 45% by wt., preferably 14 to 40% by wt. of the resin preparation.

6. Dispersion adhesives, according to one or more of the preceeding claims,
characterized in that
they contain 16 to 36% by wt., preferably 18 to 33% by wt. of the resin preparation.

7. Dispersion adhesives, according to one or more of the preceeding claims,
characterized in that
they contain 20 to 30% by wt. of the resin preparation.

8. Dispersion adhesives, according to one or more of the preceeding claims,
characterized in that
they contain resin preparations of 30 to 88% by wt. of resins and 70 to 12 % by wt. of liquid oils.

9. Dispersion adhesives, according to one or more of the preceeding claims,
characterized in that
they contain resin preparations of 40 to 86% by wt. of resins and 60 to 14% by wt. of liquid oils.

10. Dispersion adhesives, according to one or more of the preceeding claims,
characterized in that
they contain resin preparations of 50 to 84% by wt. of resins and 50 to 16% by wt. of liquid oils.

11. Dispersion adhesives, according to one or more of the preceeding claims,
characterized in that
they contain resin preparations of 60 to 82% by wt. of resins and 40 to 18% by wt. of liquid oils.

12. Dispersion adhesives, according to one or more of the preceeding claims,
characterized in that
they contain resin preparations of 65 to 80% by wt. of resins and 35 to 20 % by wt. of liquid oils.

13. Dispersion adhesives, according to one or more of the preceeding claims,
characterized in that
as resins are used colophonium resins in the form of balsamic resins, root resins, and/or tall resins, or
as resins are used colophonium resins in the form of their hydrogenated, dehydrogenated, disproportionated and/or polymerized derivatives, or
as resins are used esters of colophonium resins and/or of their hydrogenated, dehydrogenated, disproportionated and/or polymerized derivatives with mono or polyvalent alcohols, or
as resins are used the methyl, butyl, ethylene glycol, diethylene glycol, triethylene glycol, glycerol and/or pentaerythritol esters of colophonium resins and/or of their hydrogenated, dehydrogenated, disproportionated and/or polymerized derivatives, or
as resins are used colophonium resins modified by paraformaldehyde and/or the hydrogenated, dehydrogenated, disproportionated and/or polymerized derivatives of colophonium resins modified by paraformaldehyde.

14. Dispersion adhesives according to one or more of the preceeding claims,
characterized in that,
as resins are used mixtures of resin acids consisting of essentially unsaturated carboxylic acids having the molecular formula C₂₀H₃₀O₂ such as abietic acid, neoabietic acid, levopimaric acid, pimaric acid, isopimaric acid, palustric acid and/or the hydrogenated, dehydrogenated, oxidized, disproportionated and/or polymerized derivatives thereof, or
as resins are used esters of mixtures of resin acids consisting of essentially unsaturated carboxylic acids having the molecular formula C₂₀H₃₀O₂ such as abietic acid, neoabietic acid, levopimaric acid,pimaric acid, isopimaric acid, palustric acid and/or the hydrogenated, dehydrogenated, oxidized, disproportionated and/or polymerized derivatives thereof with mono or polyvalent alcohols, or
as resins are used mixtures of resin acids consisting of essentially unsaturated carboxylic acids having the molecular formula C₂₀H₃₀O₂ such as abietic acid, neoabietic acid, levopimaric acid, pimaric acid, isopimaric acid, palustric acid modified by paraformaldehyde and/or the hydrogenated, dehydrogenated, oxidized, disproportionated and/or polymerized derivatives thereof modified by paraformaldehyde, or
as resins are used mixtures of the resins mentioned above.

15. Dispersion adhesives according to one or more of the preceeding claims,
characterized in that
as resins are used resins having a melting point or softening range of 30 to 124°C.

16. Dispersion adhesives according to one or more of the preceeding claims,
characterized in that
as resins are used resins having a melting point or softening range of 40 to 118°C, preferably 50 to 112°C.

17. Dispersion adhesives according to one or more of the preceeding claims,
characterized in that
as resins are used resins having a melting point or softening range of 60 to 106°C, preferably 70 to 100°C.

18. Dispersion adhesives according to one or more of the preceeding claims,
characterized in that
as resins are used resins being liquid at room temperature or as resins are used mixtures of the above claimed resins.

19. Dispersion adhesives according to one or more of the preceeding claims,
characterized in that
as carrier medium oils are used natural mixtures of glycerol esters of essentially C₁₄ - C₂₂ fatty acids.

20. Dispersion adhesives according to one or more of the preceeding claims,
characterized in that
as carrier medium oils are used natural and optionally refined or purified flax-seed oil, rape-seed oil, castor oil, beet-root oil, soya oil, sunflower oil or the mixtures thereof.

21. Dispersion adhesives according to one or more of the preceeding claims,
characterized in that
as carrier medium oils are used natural and optionally refined or purified rape-seed oil, castor oil or soya oil or the mixtures thereof.

22. Dispersion adhesives according to one or more of the preceeding claims,
characterized in that
as a carrier medium oil is used natural and optionally refined or purified rape-seed oil.

23. Dispersion adhesives according to one or more of the preceeding claims,
characterized in that
as a carrier medium oil is used natural and optionally refined or purified castor oil.

24. Dispersion adhesives according to one or more of the preceeding claims,
characterized in that
as a carrier medium oil is used natural and optionally refined or purified soya oil.

25. Dispersion adhesives according to one or more of the preceding claims,
characterized in that
as carrier medium oils are used esters of mixtures of saturated and unsaturated C14 to C22 fatty acids of vegetable origin with monovalent C1 to C12 alcohols.

26. Dispersion adhesives according to one or more of the preceeding claims,
characterized in that
as carrier medium oils are used esters of tall oil fatty acid mixtures with monovalent C1 to C8 alcohols.

27. Dispersion adhesives according to one or more of the preceeding claims,
characterized in that
as carrier medium oils are used the methyl, butyl or 2-ethylhexyl esters of tall oil fatty acid mixtures alone or as mixtures thereof.

28. Dispersion adhesives according to one or more of the preceeding claims,
characterized in that
as a carrier medium oil is used the butyl ester of tall oil fatty acid mixtures.

29. Dispersion adhesives according to one or more of the preceeding claims,
characterized in that
as carrier medium oils are used mixtures of the oils described.

30. The process for the production of resin preparations according to one or more of the preceeding claims,
characterized in that
the liquid carrier medium is charged into a heatable mixing container, followed by heating to 20 to 130°C, then the resins are admixed under agitation and the agitation is continued while maintaining the temperature at 20 to 130°C, until a mixture, preferably a homogenous mixture, is obtained, and that for the production of an adhesive preparation, preferably of a homogenous adhesive preparation, the dispersion preparation which is still free of resin is charged into a heatable mixing container, followed by heating to 20 to 90°C, and then the liquid resin preparation having a temperature of 30 to 90°C is admixed under agitation and is dispersed for a period sufficiently long to obtain an adhesive preparation, preferably a homogenous adhesive preparation.

31. The process for the production of resin preparations according to one or more of the preceeding claims,
characterized in that
the liquid carrier medium is charged into a heatable mixing container, followed by heating to 70 to 90°C, then the resins are admixed under agitation and the agitation is continued while maintaining the temperature at 70 to 90°C, until a mixture, preferably a homogenous mixture, is obtained, and that for the production of an adhesive preparation, preferably of a homogenous adhesive preparation, the dispersion preparation which is still free of resin is charged into a heatable mixing container, followed by heating to 20 to 90°C, and then the liquid resin preparation having a temperature of 30 to 90°C is admixed under agitation and is dispersed for a period sufficiently long to obtain an adhesive preparation, preferably a homogenous adhesive preparation.

32. The use of the resin preparation according to one or more of the preceeding claims for the production of resin-based low-emission dispersion adhesives.

33. The use of the dispersion adhesives according to one or more of the preceeding claims for glueing planar structures, which are selected from the group of ceramics, stone, wood, plastics, textiles, paper, cardboard.

34. The use of the dispersion adhesives according to one or more of the preceeding claims for glueing floor, wall and ceiling coverings made of ceramics, PVC, polyolefin, rubber, textiles, linoleum, cork, wooden materials in interiors.

## Revendications

1. Adhésifs en dispersion, contenant des dispersions aqueuses connues en soi et éventuellement des additifs supplémentaires connus en soi,
caractérisés en ce qu'ils contiennent une composition de résines consistant en un mélange de
a. 20 à 90 % en poids de résines ayant un point de fusion ou un domaine de ramollissement de 20 a 130°C, sous forme de résines de colophane naturelles et/ou modifiées et/ou d'esters de résines de colophane et/ou de mélanges d'acides résiniques obtenus à partir de colophane et/ou de leurs esters, et
b. 80 à 10 % en poids d'huilés liquides à la température ambiante, en tant que véhicule pour les résines indiquées en a., constituées de mélanges naturels d'esters de glycérol et d'acides gras en C₁₄-C₂₂ saturés et/ou insaturés et/ou contenant des groupes hydroxyle, d'origine végétale, et/ou d'esters de mélanges d'acides gras en C₁₄-C₂₂ saturés et/ou insaturés, d'origine végétale, avec des alcools monohydroxylés en C₁-C₁₂.

2. Adhésifs en dispersion selon la revendication 1, constitués de
a. 5 - 60 % en poids de la composition de résines selon la revendication 1 et
b. 40 - 95 % en poids de dispersions ou émulsions aqueuses de polymères de type connu en soi.

3. Adhésifs en dispersion selon la revendication 1 ou 2, caractérisés en ce que les adhésifs en dispersion, constitués de 5 à 60 % en poids de la composition de résines selon la revendication 1 et de 40 à 95 % en poids de dispersions ou émulsions aqueuses de polymères de type connu en soi, contiennent des dispersants, anti-mousses, conservateurs, épaississants, stabilisants, additifs et charges supplémentaires, également de type connu en soi.

4. Adhésifs en dispersion selon une ou plusieurs des revendications précédentes, caractérisés en ce qu'ils contiennent de 8 à 55 % en poids, de préférence de 10 à 50 % en poids, de composition de résines.

5. Adhésifs en dispersion selon une ou plusieurs des revendications précédentes, caractérisés en ce qu'ils contiennent de 12 à 45 % en poids, de préférence de 14 à 40 % en poids, de composition de résines.

6. Adhésifs en dispersion selon une ou plusieurs des revendications précédentes, caractérisés en ce qu'ils contiennent de 16 à 36 % en poids, de préférence de 18 à 33 % en poids, de composition de résines.

7. Adhésifs en dispersion selon une ou plusieurs des revendications précédentes, caractérisés en ce qu'ils contiennent de 20 à 30 % en poids de composition de résines.

8. Adhésifs en dispersion selon une ou plusieurs des revendications précédentes, caractérisés en ce qu'ils contiennent des compositions de résines constituées de 30 à 88 % en poids de résines et de 70 à 12 % en poids d'huiles liquides.

9. Adhésifs en dispersion selon une ou plusieurs des revendications précédentes, caractérisés en ce qu'ils contiennent des compositions de résines constituées de 40 à 86 % en poids de résines et de 60 à 14 % en poids d'huiles liquides.

10. Adhésifs en dispersion selon une ou plusieurs des revendications précédentes, caractérisés en ce qu'ils contiennent des compositions de résines constituées de 50 à 84 % en poids de résines et de 50 à 16 % en poids d'huiles liquides.

11. Adhésifs en dispersion selon une ou plusieurs des revendications précédentes, caractérisés en ce qu'ils contiennent des compositions de résines constituées de 60 à 82 % en poids de résines et de 40 à 18 % en poids d'huiles liquides.

12. Adhésifs en dispersion selon une ou plusieurs des revendications précédentes, caractérisés en ce qu'ils contiennent des compositions de résines constituées de 65 à 80 % en poids de résines et de 35 à 20 % en poids d'huiles liquides.

13. Adhésifs en dispersion selon une ou plusieurs des revendications précédentes, caractérisés en ce que l'on utilise
en tant que résines, des résines de colophane sous forme de résines de baume, de résines de térébenthine et/ou de tallöls, ou
en tant que résines, des résines de colophane sous forme de leurs dérivés hydrogénés, déshydrogénés, dismutés et/ou polymérisés, ou
en tant que résines, des esters de résines de colophane et/ou de leurs dérivés hydrogénés, déshydrogénés, dismutés et/ou polymérisés, et d'alcools mono- ou polyhydroxylés, ou
en tant que résines, des esters de méthyle, butyle, éthylèneglycol, diéthylèneglycol, triéthylèneglycol, glycérol et/ou pentaérythritol de résines de colophane et/ou de leurs dérivés hydrogénés, déshydrogénés, dismutés et/ou polymérisés, ou
en tant que résines, des résines de colophane modifiées par du paraformaldéhyde et/ou des dérivés hydrogénés, déshydrogénés, dismutés et/ou polymérisés de résines de colophane, modifiés par du formaldéhyde.

14. Adhésifs en dispersion selon une ou plusieurs des revendications précédentes, caractérisés en ce que l'on utilise
en tant que résines, des mélanges d'acides résiniques essentiellement constitués d'acides carboxyliques insaturés de formule brute C₂₀H₃₀O₂, par exemple d'acides abiétique, néoabiétique, lévopimarique, pimarique, isopimarique, palustrique et/ou de leurs dérivés hydrogénés, déshydrogénés, oxydés, dismutés et/ou polymérisés, ou
en tant que résines, des esters de mélanges d'acides résiniques essentiellement constitués d'acides carboxyliques insaturés de formule brute C₂₀H₃₀O₂, par exemple d'acides abiétique, néoabiétique, lévopimarique, pimarique, isopimarique, palustrique et/ou de leurs dérivés hydrogénés, déshydrogénés, oxydés, dismutês et/ou polymérisés, et d'alcools mono- ou polyhydroxylés, ou
en tant que résines, des mélanges d'acides résiniques modifiés par du paraformaldéhyde, essentiellement constitués d'acides carboxyliques insaturés de formule brute C₂₀H₃₀O₂, par exemple des acides abiétique, néoabiétique, lévopimarique, pimarique, isopimarique, palustrique et/ou de leurs dérivés hydrogénés, déshydrogénés, oxydés, dismutés et/ou polymérisés, modifiés par du paraformaldéhyde, ou
en tant que résines, des mélanges des résines précédentes.

15. Adhésifs en dispersion selon une ou plusieurs des revendications précédentes, caractérisés en ce que l'on utilise en tant que résines des résines ayant un point de fusion ou un domaine de ramollissement allant de 30 a 124°C.

16. Adhésifs en dispersion selon une ou plusieurs des revendications précédentes, caractérisés en ce que l'on utilise en tant que résines des résines ayant un point de fusion ou un domaine de ramollissement allant de 40 à 118°C, de préférence de 50 à 112°C.

17. Adhésifs en dispersion selon une ou plusieurs des revendications précédentes, caractérisés en ce que l'on utilise en tant que résines des résines ayant un point de fusion ou un domaine de ramollissement allant de 60 à 106°C, de préférence de 70 à 100°C.

18. Adhésifs en dispersion selon une ou plusieurs des revendications précédentes, caractérisés en ce que l'on utilise en tant que résines des résines liquides à la température ambiante ou en ce que l'on utilise en tant que résines des mélanges des résines revendiquées précédemment.

19. Adhésifs en dispersion selon une ou plusieurs des revendications précédentes, caractérisée en ce que l'on utilise en tant qu'huiles véhicule des mélanges naturels d'esters de glycérol avec des acides gras essentiellement en C₁₄-C₂₂.

20. Adhésifs en dispersion selon une ou plusieurs des revendications précédentes, caractérisés en ce que l'on utilise en tant qu'huiles véhicule l'huile de lin, l'huile de colza, l'huile de ricin, l'huile de navette, l'huile de soja, l'huile de tournesol, naturelles, éventuellement raffinées ou purifiées, ou des mélanges de celles-ci.

21. Adhésifs en dispersion selon une ou plusieurs des revendications précédentes, caractérisés en ce que l'on utilise en tant qu'huiles véhicule l'huile de colza, l'huile de ricin ou l'huile de soja, naturelles, éventuellement raffinées ou purifiées, ou des mélanges de celles-ci.

22. Adhésifs en dispersion selon une ou plusieurs des revendications précédentes, caractérisés en ce que l'on utilise, en tant qu'huile véhicule, de l'huile de colza naturelle, éventuellement raffinée ou purifiée.

23. Adhésifs en dispersion selon une ou plusieurs des revendications précédentes, caractérisés en ce que l'on utilise, en tant qu'huile véhicule, de l'huile de ricin naturelle, éventuellement raffinée ou purifiée.

24. Adhésifs en dispersion selon une ou plusieurs des revendications précédentes, caractérisés en ce que l'on utilise, en tant qu'huile véhicule, de l'huile de soja naturelle, éventuellement raffinée ou purifiée.

25. Adhésifs en dispersion selon une ou plusieurs des revendications précédentes, caractérisés en ce que l'on utilise, en tant qu'huiles véhicule, des esters de mélanges d'acides gras en C₁₄-C₂₂ saturés et insaturés, d'origine végétale, avec des alcools en C₁-C₁₂ monohydroxylés.

26. Adhésifs en dispersion selon une ou plusieurs des revendications précédentes, caractérisés en ce que l'on utilise, en tant qu'huiles véhicule, des esters de mélanges d'acides gras de tallöl avec des alcools en C₁-C₈ monohydroxylés.

27. Adhésifs en dispersion selon une ou plusieurs des revendications précédentes, caractérisés en ce que l'on utilise, en tant qu'huiles véhicule, les esters de méthyle, butyle ou 2-éthylhexyle de mélanges d'acides gras de tallöl, seuls ou en mélange.

28. Adhésifs en dispersion selon une ou plusieurs des revendications précédentes, caractérisés en ce que l'on utilise, en tant qu'huile véhicule, l'ester butylique de mélanges d'acides gras de tallöl.

29. Adhésifs en dispersion selon une ou plusieurs des revendications précédentes, caractérisés en ce que l'on utilise, en tant qu'huiles véhicule, des mélanges des huiles décrites.

30. Procédé pour la préparation des compositions de résines selon une ou plusieurs des revendications précédentes, caractérisé en ce que l'on dispose au préalable le milieu liquide formant véhicule dans un récipient de mélange pouvant être chauffé, puis on le chauffe à 20-130°C, on y incorpore ensuite les résines, sous agitation, et on agite, en maintenant la température de 20 à 130°C, jusqu'à l'obtention d'un mélange, de préférence d'un mélange homogène, et en ce que, pour la préparation d'une composition d'adhésif, de préférence d'une composition d'adhésif homogène, on dispose au préalable la composition en dispersion, encore dépourvue de résine, dans un récipient de mélange pouvant être chauffé, puis on la chauffe à 20-90°C, et on y incorpore ensuite, sous agitation, la composition liquide de résines à une température de 30 à 90°C et on la disperse dans la composition jusqu'à l'obtention d'une composition d'adhésif, de préférence une composition d'adhésif homogène.

31. Procédé pour la préparation des compositions de résines selon une ou plusieurs des revendications précédentes, caractérisé en ce que l'on dispose au préalable le milieu liquide formant véhicule dans un récipient de mélange pouvant être chauffé, puis on le chauffe à 70-90°C, on y incorpore ensuite les résines, sous agitation, et on agite ensuite, en maintenant une température de 70-90°C, jusqu'à l'obtention d'un mélange, de préférence d'un mélange homogène, et en ce que, pour la préparation d'une composition d'adhésif, de préférence une composition d'adhésif homogène, on dispose au préalable la composition en dispersion, encore dépourvue de résine, dans un récipient de mélange pouvant être chauffé, puis on la chauffe à 20-90°C, et on y incorpore ensuite, sous agitation, la composition liquide de résines à une température de 30 à 90°C et on la disperse dans la composition jusqu'à l'obtention d'une composition d'adhésif, de préférence une composition d'adhésif homogène.

32. Utilisation de la composition de résines selon une ou plusieurs des revendications précédentes, pour la préparation d'adhésifs en dispersion contenant des résines, à faible émission.

33. utilisation des adhésifs en dispersion selon une ou plusieurs des revendications précédentes, pour le collage de surfaces choisies dans le groupe constitué par la céramique, la pierre, le bois, les matières plastiques, les textiles, le papier, le carton.

34. Utilisation des adhésifs en dispersion selon une ou plusieurs des revendications précédentes, pour le collage de revêtements de sols, de murs et de couvertures choisis parmi la céramique, le PVC, une polyoléfine, le caoutchouc, des textiles, le linoléum, le liège, des matériaux en bois dans des intérieurs.
